(19) Europäisches Patentamt
European Patent Office
Office européen des brevets

(11) EP 2 261 119 B1

(12) **FASCICULE DE BREVET EUROPEEN**

(45) Date de publication et mention
de la délivrance du brevet:
**29.08.2012  Bulletin 2012/35**

(51) Int Cl.:
**B64C 27/22** *(2006.01)*

(21) Numéro de dépôt: **10004728.1**

(22) Date de dépôt: **05.05.2010**

(54) **Procédé de contrôle en lacet d'un hélicoptère hybride, et hélicoptère hybride muni d'un dispositif de commande en lacet apte à mettre en oeuvre ledit procédé**

Verfahren zur Gierkontrolle eines Hybridhelikopters, und mit dieser Giersteuerungsvorrichtung ausgestatteter Hybridhelikopter, die in der Lage ist, dieses Verfahren umzusetzen

Method for directional control of a hybrid helicopter and hybrid helicopter provided with a directional control device suitable for implementing said method

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.06.2009  FR 0902686**

(43) Date de publication de la demande:
**15.12.2010  Bulletin 2010/50**

(73) Titulaire: **EUROCOPTER**
**13725 Marignane Cédex (FR)**

(72) Inventeurs:
• **Gemmati, Bernard**
**84360 Lauris (FR)**

• **Queiras, Nicolas**
**13220 Châteauneuf-les-Martigues (FR)**
• **Eglin, Paul**
**13100 Aix en Provence (FR)**

(74) Mandataire: **Pouillot, Laurent Pierre Paul**
**GPI & Associés**
**1330, rue Guillibert de la Lauzière**
**EuroParc de Pichaury, Bât B2.9 - 1er Et.**
**13856 Aix-en-Provence Cedex 3 (FR)**

(56) Documents cités:
**EP-A1- 2 105 378      FR-A1- 2 916 421**
**GB-A- 613 715      US-B2- 6 513 752**

**Description**

La présente invention concerne un procédé de contrôle en lacet d'un hélicoptère hybride, et un hélicoptère hybride muni d'un dispositif de commande en lacet apte à mettre en oeuvre ledit procédé.

Plus particulièrement, l'invention se rapporte donc à un hélicoptère hybride relatif à un concept avancé d'aéronef à décollage et à atterrissage verticaux, désigné « VTOL Aircraft » ou « Vertical Take-Off and Landing Aircraft » en langue anglaise.

Ce concept avancé d'hélicoptère hybride allie à un coût raisonnable l'efficacité du vol vertical de l'hélicoptère conventionnel aux performances à grande vitesse de déplacement permises par l'utilisation d'hélices propulsives et l'installation de turbomoteurs modernes.

Afin de bien comprendre l'objectif de l'invention, il convient de rappeler que les principaux matériels volants correspondent aux avions et aux giravions.

On désigne sous le nom de giravion tout appareil dont la sustentation est assurée totalement ou partiellement par une (ou plusieurs) hélice(s) d'axe sensiblement vertical, de grand diamètre, appelé rotor ou encore voilure tournante.

On distingue dans la catégorie des giravions plusieurs types distincts.

Tout d'abord, l'hélicoptère dont au moins un rotor principal, entraîné par une motorisation appropriée, assure à la fois la sustentation et la propulsion.

Ensuite, l'autogire est un giravion dont le rotor ne reçoit pas de puissance, mais assure la sustentation en tournant en autorotation sous l'effet de la vitesse d'avancement de l'appareil. La propulsion est assurée par un turbomoteur ou encore par une hélice, d'axe sensiblement horizontal en vol d'avancement, entraînée par un moteur classique.

Le girodyne est un giravion intermédiaire entre l'hélicoptère et l'autogire dont le rotor n'assure que la sustentation. Ce rotor est normalement entraîné par une installation motrice pour les phases de décollage, vol stationnaire ou vertical et atterrissage, à l'instar de l'hélicoptère. Un girodyne comporte aussi un système de propulsion additionnel essentiellement différent de l'ensemble rotor. En vol d'avancement, le rotor assure encore la sustentation, mais uniquement en mode autorotation, c'est-à-dire sans transmission de puissance au dit rotor.

Plusieurs autres formules nouvelles ont fait l'objet d'études plus ou moins poussées dont certaines ont parfois donné lieu à des réalisations pratiques.

A ce titre, on peut citer le combiné qui décolle et atterrit comme un hélicoptère, et vole en croisière comme un autogire : son rotor, animé d'un mouvement d'autorotation grâce à la vitesse d'avancement de l'appareil, assure une partie de la portance, l'autre partie étant assurée par une aile auxiliaire. Une hélice tractrice d'axe sensiblement horizontal crée l'effort nécessaire au mouvement de translation. Le document GB613715 présente par exemple un combiné.

De même, on connaît par le document US-6,513,752 un aéronef comprenant :

- un fuselage et une aile,

- deux hélices à pas variable,

- un rotor avec des masses « aux extrémités » (sic.),

- une source de puissance entraînant les deux hélices et le rotor,

- un moyen de contrôle pour ajuster le pas des hélices de sorte que :

· en vol d'avancement, la poussée des hélices est exercée vers l'avant de l'aéronef,

· en vol stationnaire, la fonction anticouple est réalisée par la poussée d'une hélice vers l'avant et celle de l'autre vers l'arrière de l'aéronef et le rotor est entraîné par la source de puissance,

- la source de puissance comprend un moteur et un embrayage, qui par déconnection du rotor par rapport au moteur permet au rotor de tourner plus vite qu'une sortie dudit moteur, en raison des masses précitées.

En complément, il est précisé que l'embrayage autorise le mode autogire en vol d'avancement. Par conséquent, l'aéronef selon ce document US-6,513,752 est du type combiné.

De plus, une boîte de transmission de puissance disposée entre la source de puissance et les hélices permet auxdites hélices de fonctionner à plusieurs vitesses de rotation par rapport à la vitesse d'une sortie de ladite source de puissance.

Le convertible constitue une autre formule particulière de giravion. Cette désignation englobe tous les giravions qui changent de configuration au cours du vol : décollage et atterrissage en configuration hélicoptère, vol de croisière en configuration avion, deux rotors étant par exemple basculés de 90 degrés environ pour servir d'hélices.

On connaît une autre formule novatrice dénommée « hélicoptère hybride » par commodité.

Cet hélicoptère hybride comprend un fuselage, un rotor principal destiné à entraîner en rotation des pales grâce à au moins un turbomoteur.

De plus, l'hélicoptère hybride est pourvu d'une aile composée de deux demi-ailes, deux hélices propulsives étant placées de part et d'autre du fuselage, sur les demi-ailes.

En outre, l'hélicoptère hybride est équipé d'une chaîne cinématique intégrée, qui, outre le ou les turbomoteurs, le rotor et les deux hélices, comprend un système mécanique d'interconnexion entre ces éléments.

Avec cette configuration, les vitesses de rotation des sorties du ou des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Par conséquent et de façon avantageuse, le rotor demeure toujours entraîné en rotation par le (ou les) turbomoteur(s), et développe toujours une portance quelle que soit la configuration de l'hélicoptère hybride, aussi bien en vol d'avancement qu'en vol stationnaire. L'hélicoptère hybride n'est donc ni un autogire, ni un girodyne, ni un combiné mais un nouveau type de giravion.

Plus précisément, le rotor est destiné à assurer la totalité de la portance de l'hélicoptère hybride pendant les phases de décollage, d'atterrissage et de vol vertical puis partiellement pendant le vol de croisière, l'aile contribuant alors pour partie à supporter ledit hélicoptère hybride.

Ainsi, le rotor exerce la plus grande part de la sustentation de l'hélicoptère hybride en vol de croisière avec éventuellement une faible contribution aux forces propulsives ou traction et toujours avec une traînée minimale.

En modifiant collectivement et d'une même quantité le pas des pales des hélices de l'hélicoptère hybride, il est en outre possible de contrôler la poussée générée par ces hélices.

A contrario, les fonctions anticouple et de contrôle de direction sont réalisées par l'utilisation d'une poussée différentielle exercée par les hélices, par exemple via la mise en oeuvre d'un palonnier par le pilote.

Néanmoins, on constate qu'une utilisation abusive du palonnier peut conduite à une manoeuvre induisant un stress mécanique important pour l'hélicoptère, voire à une embardée violente de cet hélicoptère hybride.

Le domaine technique de l'invention est donc le domaine technique restreint des commandes de vol d'un hélicoptère hybride.

Cependant, on peut citer les brevets FR2476013 et FR1132452 qui décrivent des dispositifs pour permettre un déplacement important d'une gouverne à faible vitesse et restreindre ledit déplacement à une vitesse importante.

Ainsi, selon le brevet FR2476013, un organe de réglage limite le déplacement d'un moyen de commande, apte à être mis en mouvement par un pilote, en fonction d'un signal dérivé d'une pression dynamique.

A contrario, le brevet FR1132452 prévoit de limiter en fonction de la vitesse d'avancement de l'aéronef les effets du déplacement d'un moyen de commande sur une gouverne, un déplacement identique du moyen de commande induisant des déplacements différents de la gouverne en fonction de ladite vitesse d'avancement.

Bien qu'intéressante, ces solutions semblent peu adaptées au contexte très particulier d'un hélicoptère hybride.

Par ailleurs, le document plus pertinentFR 2916421 présente un système de commande muni d'un organe d'élaboration d'une consigne de pas moyen.

La présente invention a alors pour objet de proposer un procédé permettant de s'affranchir des limitations mentionnées ci-dessus pour préserver l'intégrité physique d'un hélicoptère hybride.

Selon l'invention, un procédé de contrôle de l'attitude en lacet d'un hélicoptère hybride comportant un fuselage et comprenant :

- un rotor principal de sustentation agencé au dessus du fuselage,

- une surface sustentatrice d'appoint munie d'une première et d'une deuxième demi-ailes s'étendant de part et d'autre dudit fuselage, chaque demi-aile étant pourvue d'une première et d'une deuxième hélices disposées de fait de part et d'autre du fuselage,

- un système mécanique d'interconnexion entre le rotor principal et lesdites hélices, au moins un turbomoteur entraînant en permanence en rotation le rotor principal et les hélices en engrenant le système mécanique,

- une commande de poussée apte à modifier de la même quantité, à savoir d'un pas moyen, le premier pas des premières pales de la première hélice et le deuxième pas des deuxièmes pales de la deuxième hélice, est remarquable en ce que, ledit hélicoptère hybride comportant un moyen de commande en lacet apte à générer un ordre originel pour modifier l'attitude en lacet dudit hélicoptère hybride en augmentant le pas des premières pales de la première hélice et en baissant le pas des deuxièmes pales de l'autre hélice d'un pas différentiel, on optimise ledit ordre originel par un gain variable en fonction de la commande de poussée pour obtenir un ordre optimisé de commande en lacet transmis auxdites première et deuxième pales.

Ainsi, la commande de poussée, un levier par exemple, permet de déterminer le pas moyen des premières et deuxièmes pales des première et deuxième hélices. En manoeuvrant, cette commande de poussée, le pilote agit de la même manière sur ces premières et deuxièmes pales des première et deuxième hélices.

A contrario, afin de piloter l'hélicoptère hybride en lacet, le pilote agit sur un moyen de commande en lacet, un palonnier par exemple.

Les premier et deuxième pas des premières et deuxièmes pales s'écartent alors de leur pas moyen, le pas des pales d'une hélice augmentant d'un pas différentiel alors que le pas des pales de l'autre hélice diminue de ce même pas différentiel. Le pas d'une hélice est ainsi égal à la somme du pas moyen et du pas différentiel alors que le pas de l'autre hélice est égal à la différence du pas moyen et du pas différentiel. Autrement dit, le pas différentiel est égal à la demi-différence du pas de la deuxième hélice moins le pas de la première hélice par exemple.

De plus, selon l'invention le pas différentiel est déterminé en fonction de la position de la commande de poussée d'une manière novatrice et innovante.

En effet, le moyen de commande en lacet donne un ordre originel tendant à modifier le pas des pales des première et deuxième hélices d'un pas différentiel initial.

Par exemple, ledit ordre originel O1 est en degré de pas différentiel, cet ordre originel étant déterminé à l'aide de la formule suivante, où DDN représente la commande de pas différentiel en pourcent et « K » représente la valeur absolue de l'amplitude maximale dudit pas différentiel à poussée nulle :

$$O1 = K \times \frac{DDN - 50}{100}$$

Par ailleurs, « K » est déterminé en fonction du giravion. Par exemple, le pas différentiel d'un giravion variant de moins 9 degrés à plus 9 degrés, la valeur absolue K de l'amplitude maximale est égale à 18 degrés.

Le moyen de commande en lacet étant un palonnier apte à effectuer un mouvement rotatif dans les sens dextrorsum et senestrorsum autour d'un point, avec K valant 18 degrés DDN vaut par exemple :

- 0% quand le palonnier est mis en rotation dans le sens dextrorsum jusqu'à une première butée ce qui induit un ordre originel O1 égal à moins 9 degrés,

- 100% quand le palonnier est mis en rotation dans le sens senestrorsum jusqu'à une deuxième butée ce qui induit un ordre originel O1 égal à plus 9 degrés,

- 50% quand le palonnier est centré à savoir lorsque le pilote n'exerce aucun effort sur ce palonnier ce qui induit un ordre originel O1 égal à 0 degrés.

Dès lors, selon le mode de réalisation on optimise l'ordre originel donné par le pilote en le corrigeant, en le modulant par un gain, ou en le corrigeant et en le modulant par un gain, la correction et/ou la modification effectuées étant variables en fonction de la commande de poussée et donc éventuellement en fonction de la position de cette commande de poussée, de manière à obtenir un ordre optimisé.

A titre d'exemple, selon un mode de réalisation, on modifie le pas des pales des première et deuxième hélices d'un pas différentiel modulé, et non pas d'un pas différentiel originel induit par le moyen de commande en lacet, le pas différentiel modulé étant égal au pas différentiel originel multiplié par un gain.

Par exemple, le pilote manoeuvre son palonnier pour donner un ordre originel induisant une augmentation du pas de la première hélice de 9 degrés, et donc une diminution du pas de la deuxième hélice de 9 degrés.

Or, compte tenu de la position de la commande de poussée, une telle variation n'est pas nécessaire. En admettant que le gain ait une valeur de 0.5 du fait de la position de la commande de poussée, on va finalement moduler l'ordre originel en le multipliant par le gain. Ainsi, on augmente le pas de la première hélice de 9 degrés fois 0.5 soit 4.5 degrés et on diminue le pas de la deuxième hélice de 9 degrés fois 0.5 soit 4.5 degrés.

Par conséquent, on restreint finalement la variation du pas différentiel entre les première et deuxième hélices en fonction d'une commande de vol.

En restreignant cette variation différentielle, on garantit notamment l'absence d'embardée violente susceptible d'endommager l'hélicoptère hybride.

Le procédé mis en oeuvre peut en outre comporter une ou plusieurs des caractéristiques suivantes.

Selon une première variante, l'ordre optimisé est égal à l'ordre originel auquel on ajoute un terme correctif pour modifier le pas différentiel en fonction de la commande de poussée.

Ainsi, pour obtenir cet ordre optimisé, on corrige l'ordre originel en ajoutant à cet ordre originel un terme correctif fonction de la position de la commande de poussée conformément à la première relation suivante :

$$O2 = O1 + P0*[1-(PCOM/100)]$$

où O2 représente ledit ordre optimisé en degré de pas différentiel, O1 représente ledit ordre originel en degré de pas différentiel, P0 représente le pas différentiel à poussée nulle et lorsque le moyen de commande en lacet est centré, PCOM représente le pourcentage de la poussée résultante générée par la commande de poussée du fait de sa position en pourcent, « * » et « / » représentant respectivement le signe de la multiplication et de la division.

Selon une deuxième variante, l'ordre optimisé est égal à un ordre originel modulé pour limiter l'autorité du pilote.

Ainsi, pour obtenir cet ordre optimisé, on module l'ordre originel par un gain variable en fonction de la position de la commande de poussée conformément à la deuxième relation suivante :

$$O2 = O1*G$$

où O2 représente ledit ordre optimisé en degré de pas différentiel, O1 représente ledit ordre originel en degré de pas différentiel, G représente ledit gain et « * » le signe de la multiplication.

Selon une troisième variante, l'ordre optimisé est égal à un ordre originel modulé auquel on ajoute un terme correctif pour limiter l'autorité du pilote et modifier le pas différentiel en fonction de la position de la commande de poussée.

Alors, pour obtenir ledit ordre optimisé, on module l'ordre originel par un gain variable en fonction de la position de la commande de poussée et on ajoute, à l'ordre modulé obtenu, un terme correctif fonction de la position de la commande de poussée conformément à la troisième relation suivante :

$$O2 = O1*G + P0*[1-(PCOM/100)]$$

où O2 représente ledit ordre optimisé en degré de pas différentiel, O1 représente ledit ordre originel en degré de pas différentiel par exemple, G représente ledit gain, P0 représente ledit pas différentiel à poussée nulle et lorsque le moyen de commande en lacet est centré, PCOM représente le pourcentage de la poussée résultante générée par la commande de poussée en pourcent du fait de sa position, « * » et « / » représentant respectivement le signe de la multiplication et de la division. Avantageusement, le gain variable mis en oeuvre dans les deuxième et troisième modes de réalisations décroît d'un gain maximal atteint lorsque la commande de poussée génère une poussée résultante minimale des première et deuxième hélices vers un gain minimal atteint lorsque la commande de poussée génère une poussée résultante maximale des première et deuxième hélices.

Plus précisément, il est avantageux que le gain minimal soit égal à un tiers du gain maximal.

Par ailleurs, selon une première alternative, il est avantageux que le gain et/ou le terme correctif varient selon une loi linéaire de manière à pouvoir mettre en oeuvre un moyen exclusivement mécanique. De tels gain et terme correctif linaires donnent pleinement satisfaction en termes de pilotabilité et de confort.

Notamment, il est envisageable que le gain décroisse d'un gain maximal, atteint lorsque la commande de poussée génère une poussée résultante minimale des première et deuxième hélices telle qu'une poussée nulle en vol stationnaire, vers un gain minimal, atteint lorsque la commande de poussée génère une poussée résultante maximale des première et deuxième hélices.

Par suite, à une grande vitesse de l'hélicoptère hybride, l'autorité du moyen de commande en lacet est réduite en minimisant son action. Ainsi, un même ordre donné au moyen de commande en lacet génère une variation de pas des pales des hélices plus importante à faible vitesse qu'à grande vitesse.

Par ailleurs, dans le cadre d'un gain variant linéairement, le gain est éventuellement déterminé à l'aide de la quatrième relation suivante où G représente ledit gain, GMIN ledit gain minimum, GMAX ledit gain maximum, PCOM le pourcentage de la poussée résultante généré par la position de la commande de poussée à un instant donné et « * » le signe de la multiplication :

$$G = GMAX - [(GMAX - GMIN) * (PCOM/100)]$$

Il est à noter que le gain maximal et le gain minimal sont déterminés à l'aide d'essais usuels en fonction des caractéristiques de l'hélicoptère hybride, de simulations permettant de tester différentes configurations, l'homme du métier étant à même d'optimiser la valeur de ces gains maximal et minimal. Par exemple, le gain maximal peut être égal à une unité alors que le gain minimal est égal à un tiers.

Dans ces conditions, le gain diminue linéairement d'un gain maximal GMAX, lorsque la commande de poussée est dans une position minimale et génère une poussée nulle, à un gain minimal GMIN lorsque la commande de poussée est dans une position maximale et génère une poussée égale à 100% de la poussée maximale admissible, le pourcentage PCOM étant égal à 0 à poussée nulle et à 100 à 100% de la poussée maximale admissible.

Selon une deuxième alternative, le gain et/ou le terme correctif peuvent varier selon une loi non linéaire. Par exemple, en utilisant un moyen à vérins commandés électroniquement le gain et le terme correctif peuvent varier selon une loi non linéaire avantageuse, en permettant une autorité symétrique de commande en lacet dans un sens ou dans l'autre par rapport à la position d'équilibre en lacet de l'hélicoptère hybride et le pilotage en vol stabilisé avec le moyen de commande en lacet, un palonnier, centré.

Outre le procédé précédemment décrit, l'invention a pour objet l'hélicoptère hybride mettant en oeuvre ce procédé.

Ainsi, selon l'invention, un hélicoptère hybride comporte un fuselage et comprend :

- un rotor principal de sustentation agencé au dessus du fuselage,

- une surface sustentatrice d'appoint munie d'une première et d'une deuxième demi-ailes s'étendant de part et d'autre dudit fuselage, chaque demi-aile étant pourvue d'une première et d'une deuxième hélices disposées de fait de part et d'autre du fuselage,

- un système mécanique d'interconnexion entre ledit rotor principal et lesdites hélices, au moins un turbomoteur entraînant en permanence en rotation ledit rotor principal et lesdites hélices en engrenant ledit système mécanique,

- une commande de poussée apte à modifier de la même quantité le premier pas des premières pales de la première hélice et le deuxième pas des deuxièmes pales de la deuxième hélice,

- un dispositif de commande en lacet pourvu d'un moyen de commande en lacet apte à générer un ordre originel pour modifier l'attitude en lacet dudit hélicoptère hybride en augmentant le premier pas desdites premières pales et en baissant le deuxième pas desdites deuxièmes pales d'un pas différentiel,

- un combinateur apte à combiner un ordre de commande de poussée, donné par le pilote pour modifier collectivement les premier et deuxième pas, et un ordre de commande de pas différentiel, donné par le pilote pour modifier l'attitude en lacet de l'hélicoptère hybride.

De manière remarquable, le dispositif de commande en lacet comporte un moyen d'ajustement apte à optimiser ledit ordre originel en fonction de la position de la commande de poussée pour obtenir un ordre optimisé de commande en lacet transmis auxdites premières et deuxièmes pales.

Ainsi, le moyen d'ajustement en lacet va finalement limiter le pas différentiel des première et deuxième pales en fonction de la commande de poussée en corrigeant, en modulant par un gain, ou en corrigeant et en modulant par un gain l'ordre originel.

Par suite, un déplacement donné du moyen de commande en lacet induit des modifications des premier et deuxième pas différentes en fonction de la position de la commande de poussée.

L'hélicoptère hybride est alors pourvu d'une ou plusieurs des caractéristiques suivantes.

Par exemple, pour corriger l'ordre originel, le moyen d'ajustement peut comporter un premier moyen d'optimisation.

Ce premier moyen d'optimisation est représenté par le combinateur lié au moyen de commande en lacet par au moins deux bielles gauche et droite éventuellement reliées au moyen de commande en lacet par une première chaîne cinématique principale. De plus, le combinateur est lié à la commande de poussée par une deuxième chaîne cinématique principale, à un premier organe de commande du premier pas par une première chaîne cinématique secondaire, et à un deuxième organe de commande par une deuxième chaîne cinématique secondaire.

Ainsi, le combinateur est un combinateur/ coupleur qui comporte :

- une structure porteuse dont une première zone extrémale est articulée sur un support alors qu'une deuxième zone extrémale est articulée à la deuxième chaîne cinématique principale,

- un premier levier dont une première extrémité est articulée à la bielle gauche et dont une deuxième extrémité est articulée à la première chaîne cinématique secondaire, ledit premier levier étant libre d'effectuer un mouvement rotatif autour d'un premier axe de fixation à la structure porteuse,

- un deuxième levier dont une première extrémité est articulée à la bielle droite et dont une deuxième extrémité est articulée à la deuxième chaîne cinématique secondaire, ledit deuxième levier étant libre d'effectuer un mouvement de rotation autour d'un deuxième axe de fixation à ladite structure porteuse,

- un premier bras de levier séparant la première extrémité du premier levier audit premier axe de fixation étant inférieur à un deuxième bras de levier séparant la première extrémité du deuxième levier audit deuxième axe de fixation.

Ainsi, le combinateur est à même de corriger un ordre, originel donné par le moyen de commande en lacet ou modulé par un moyen annexe, d'un terme correctif fonction de la position de la commande de poussée, ce terme correctif étant avantageusement égal à :

$$P0*[1-(PCOM/100)]$$

où P0 représente le pas différentiel à poussée nulle et lorsque le moyen de commande en lacet est centré, PCOM représente le pourcentage de la poussée résultante générée par la commande de poussée en pourcent, « * » et « / » représentent respectivement le signe de la multiplication et de la division.

Par ailleurs, pour moduler l'ordre originel, le moyen d'ajustement peut comporter un deuxième moyen d'optimisation.

Ce deuxième moyen d'optimisation est représenté par un guignol agencé en série sur une première chaîne cinématique principale entre une première chaîne cinématique principale amont liée au moyen de commande en lacet et une première chaîne cinématique principale aval dirigé vers le combinateur, et connecté à ce combinateur directement ou indirectement. Le guignol est muni d'un rayon amont et d'un rayon aval formant une angulation entre eux, de quatre vingt dix degrés par exemple, le rayon amont étant fixé à la première chaîne cinématique principale amont alors que le rayon aval est lié à la première chaîne cinématique principale aval.

De plus, le guignol comporte un moyen de réglage du quotient de la deuxième longueur du rayon aval par la première longueur du rayon amont, ce moyen de réglage étant mécaniquement commandé par la commande de poussée.

Ainsi, le quotient de la deuxième longueur du rayon aval par la première longueur du rayon amont est modulé par un gain variable en fonction de la position de la commande de poussée. Ce quotient décroit en fonction de la position de la commande de poussée d'un gain maximal, atteint lorsque la commande de poussée génère une poussée résultante minimale des première et deuxième hélices, vers un gain minimal, atteint lorsque la commande de poussée génère une poussée résultante maximale des première et deuxième hélices afin qu'un premier déplacement D1 de la première chaîne cinématique principale amont provoque un deuxième déplacement D2 de la première chaîne cinématique principale aval égal à :

$$D2=D1*G$$

où G représente le gain variable introduit par le guignol.

Selon la première alternative décrite précédemment, le gain variable décrit une loi linéaire alors que, selon une deuxième alternative le gain variable décrit une loi non linéaire.

Pour moduler l'ordre originel, le moyen d'ajustement peut comporter un troisième moyen d'optimisation.

Ce troisième moyen d'optimisation comporte un premier élément ajustable d'une première chaîne cinématique secondaire et un deuxième élément ajustable d'une deuxième chaîne cinématique secondaire, ainsi qu'un premier moyen de calcul du moyen d'ajustement. Ce premier moyen de calcul est alors apte à modifier la longueur des premier et deuxième éléments ajustables en fonction de la commande de poussée pour moduler l'ordre originel par un gain variable en fonction de la position de ladite commande de poussée.

Au moins un élément ajustable comportant un vérin solidaire d'une chaîne cinématique secondaire amont et d'une chaîne cinématique secondaire aval, le vérin étant muni d'un corps de vérin et d'une tige de vérin, le moyen de commande en lacet déplaçant la chaîne cinématique secondaire amont via un combinateur sur une première distance DIS1 selon un premier sens de déplacement, le premier moyen de calcul ordonne le déplacement de la tige de vérin par rapport au corps de vérin sur une deuxième distance DIS2 selon un deuxième sens de déplacement opposé au premier sens de déplacement, la deuxième distance est déterminée par le premier moyen de calcul à l'aide de l'équation suivante :

$$DIS2 = DIS1*[1-G]$$

où G représente ledit gain variable.

Optionnellement, le moyen d'ajustement comporte alors un capteur de position par élément ajustable relié au premier moyen de calcul pour lui envoyer une information relative à la longueur de l'élément ajustable correspondant.

En outre, le dispositif de commande en poussée comporte éventuellement un capteur de poussée relié au premier moyen de calcul pour lui envoyer une première information relative à la position de la commande de poussée. Le capteur de poussée permet alors au moyen d'ajustement de déterminer la position de la commande de poussée et d'en déduire la valeur dudit gain variable.

De même, pour connaître l'ordre de variation de pas en lacet donné par le pilote, le dispositif de commande en lacet comporte éventuellement un capteur de lacet relié au premier moyen de calcul pour lui envoyer une deuxième information relative à la position dudit moyen de commande en lacet.

Ainsi, le moyen d'ajustement est à même d'agir sur au moins un élément ajustable pour moduler, si nécessaire et en fonction de la commande de poussée, l'ordre de variation de pas en lacet donné par le pilote en ajustant la longueur de cet élément ajustable mécanique.

Selon un autre aspect, pour moduler et/ou corriger l'ordre original, le moyen d'ajustement peut comporter un quatrième moyen d'optimisation.

Ce quatrième moyen d'optimisation comporte un deuxième moyen de calcul relié notamment d'une part à la commande de poussée et au moyen de commande en lacet par des liaisons électriques ou optiques et, d'autre part, à un premier et un deuxième vérins de commande respectivement d'un premier et d'un deuxième organes de commande des premier et deuxième pas, le deuxième moyen de calcul optimisant ledit ordre original en fonction de la position de la commande de poussée pour obtenir un ordre optimisé de commande en lacet transmis aux premier et deuxième vérins de commande.

Selon un premier mode de réalisation apte à mettre en oeuvre la première variante du procédé, le moyen d'ajustement est alors muni du premier moyen d'optimisation.

Selon un deuxième mode de réalisation apte à mettre en oeuvre la deuxième variante du procédé, le moyen d'ajustement est alors muni du deuxième moyen d'optimisation.

Selon un troisième mode de réalisation apte à mettre en oeuvre la deuxième variante du procédé, le moyen d'ajustement est alors muni du troisième moyen d'optimisation.

Selon un quatrième mode de réalisation apte à mettre en oeuvre la troisième variante du procédé, le moyen d'ajustement est alors muni du premier moyen d'optimisation et du deuxième moyen d'optimisation.

Selon un cinquième mode de réalisation apte à mettre en oeuvre la troisième variante du procédé, le moyen d'ajustement est alors muni du premier moyen d'optimisation et du troisième moyen d'optimisation.

Enfin, selon un sixième mode de réalisation apte à mettre en oeuvre l'une quelconque des variantes du procédé, le moyen d'ajustement est muni du quatrième moyen d'optimisation.

L'invention et ses avantages apparaîtront avec plus de détails dans le cadre de la description qui suit avec des exemples de réalisation donnés à titre illustratif en référence aux figures annexées qui représentent :

- la figure 1, une vue d'un hélicoptère hybride,

- la figure 2, un premier diagramme explicitant la variation dudit gain en fonction de la commande de poussée selon une première alternative,

- la figure 3, un schéma présentant un dispositif de commande en lacet selon un premier mode de réalisation,

- la figure 4, un schéma présentant un combinateur de type combinateur/ coupleur utilisé notamment dans le premier mode de réalisation,

- la figure 5, un deuxième diagramme montrant le domaine restreint de l'autorité du moyen de commande selon une deuxième variante du procédé selon l'invention,

- la figure 6, un schéma présentant un dispositif de commande en lacet selon un deuxième mode de réalisation,

- la figure 7, un schéma présentant un guignol utilisé notamment dans le deuxième mode de réalisation,

- la figure 8, un schéma présentant un dispositif de commande en lacet selon un troisième mode de réalisation,

- la figure 9, un troisième diagramme montrant le domaine restreint de l'autorité du moyen de commande selon une troisième variante du procédé selon l'invention

- la figure 10, un schéma présentant un dispositif de commande en lacet selon un quatrième mode de réalisation préféré,

- la figure 11, un schéma présentant un dispositif de commande en lacet selon un cinquième mode de réalisation, et

- la figure 12, un schéma présentant un dispositif de commande en lacet selon un sixième mode de réalisation.

Les éléments présents dans plusieurs figures distinctes sont affectés d'une seule et même référence.

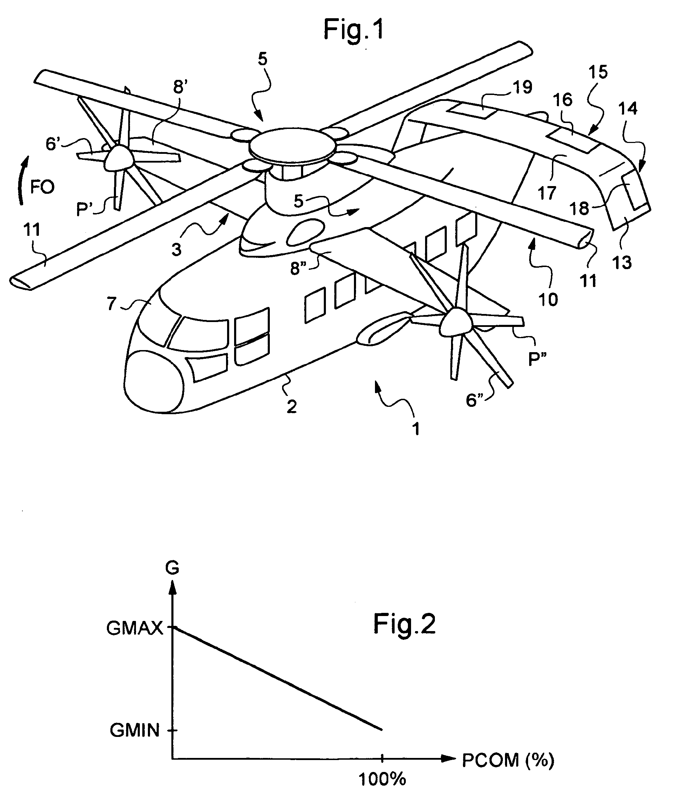

La figure 1 présente un hélicoptère hybride 1 qui comprend un fuselage 2, à l'avant duquel est prévu le poste de pilotage 7, un rotor 10 destiné à entraîner en rotation des pales 11 grâce d'une part à deux turbomoteurs 5 disposés sur le dessus du fuselage 2, de part et d'autre du fuselage 2 par rapport au plan de symétrie longitudinal de l'appareil, et d'autre part à une première boîte d'engrenages principale, non représentée sur la figure 1.

Selon l'exemple décrit, le rotor 10 tourne dans le sens dextrorsum vue de dessus conformément à la flèche F0.

Il est à noter que les deux turbomoteurs 5 ne sont pas visibles sur la figure 1 en raison de la présence de carénages.

De plus, l'hélicoptère hybride 1 est pourvu d'une aile haute 3 composée de deux demi-ailes 8', 8" disposées sur le dessus du fuselage 2.

La propulsion de l'hélicoptère hybride 1 est assurée par une première et une deuxième hélices 6', 6" entraînées par les deux turbomoteurs 5, une hélice 6', 6" étant disposée à chaque extrémité externe de l'aile 3. Les première et deuxième hélices 6', 6" comportent respectivement six premières pales P' et six deuxièmes pales P" sur l'exemple représenté.

Par ailleurs, il est éventuellement prévu, au voisinage de l'extrémité arrière du fuselage 2, des surfaces de stabilisation et de manoeuvre à savoir pour la profondeur, un empennage horizontal 15 avec deux gouvernes de profondeur mobiles 16, 19 par rapport à la partie avant 17 et pour la direction deux empennages verticaux 14, chacun de chaque côté de l'empennage horizontal 15.

En l'occurrence, l'empennage horizontal 15 et les empennages verticaux 14 forment un U renversé vers le fuselage 2.

Avantageusement, les empennages 14, verticaux ou inclinés par rapport à la verticale, peuvent être constitués d'une partie avant fixe 13 avec en arrière une partie mobile 18.

Cet hélicoptère hybride 1 est notamment remarquable, par rapport aux autres aéronefs en ce que les vitesses de rotation des sorties des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Pour contrôler l'avancement de l'hélicoptère hybride, le pilote dispose d'une commande de poussée permettant de modifier le pas moyen des premières et deuxièmes pales P', P" des première et deuxième hélices 6', 6".

Plus précisément, la commande de poussée agit de manière identique sur les premier et deuxième pas des premières et deuxièmes pales P', P" afin d'obtenir une variation collective de ces premier et deuxième pas. Par exemple, le pilote va requérir une augmentation de 5 degrés de l'ensemble des pales des hélices pour augmenter la poussée résultante générée notamment par les première et deuxième hélices.

On comprend que cette poussée résultante est comprise entre 0% de la poussée maximale admissible par l'hélicoptère hybride et 100% de cette poussée maximale admissible.

Pour contrôler l'attitude en lacet de l'hélicoptère hybride, le pilote dispose d'un dispositif de commande en lacet muni d'un moyen de commande en lacet, classiquement un palonnier, pour engendrer une variation non plus collective mais différentielle des premier et deuxième pas des premières et deuxièmes pales P', P".

Afin d'éviter d'être confronté à des manoeuvres susceptibles de dégrader l'intégrité physique de l'hélicoptère hybride, on optimise volontairement les ordres donnés par le moyen de commande en lacet en fonction de la commande de poussée.

Ainsi, lorsque le pilote demande une variation différentielle initiale des premier et deuxième pas en ordonnant au pas des pales d'une hélice d'augmenter d'une valeur différentielle initiale et au pas des pales de l'autre hélice de diminuer de ladite valeur différentielle initiale, on optimise l'ordre donné en fonction de la commande de poussée.

Plus précisément, on corrige, on module ou on module et on corrige l'ordre original donné par le pilote afin d'obtenir un ordre optimisé de variation d'un pas différentiel optimisé. Dès lors, on ordonne une augmentation du pas des pales d'une hélice d'un pas différentiel optimisé et une diminution du pas des pales de l'autre hélice dudit pas différentiel optimisé.

Plus précisément, selon une première variante du procédé mis en oeuvre par l'invention, on corrige l'ordre originel O1 en ajoutant à cet ordre originel O1 un terme correctif fonction de la position de la commande de poussée conformément à la première relation suivante :

$$O2 = O1 + P0*[1-(PCOM/100)]$$

où O2 représente l'ordre optimisé, P0 représente le pas différentiel à poussée nulle et lorsque le moyen de commande en lacet est centré, PCOM représente le pourcentage de la poussée résultante générée par la commande de poussée du fait de sa position en pourcent, « * » et « / » représentant respectivement le signe de la multiplication et de la division.

Selon une deuxième variante, l'ordre optimisé O2 est égal à un ordre originel O1 modulé par un gain G variable conformément à la deuxième relation suivante :

$$O2 = O1*G$$

Selon une troisième variante préférée, l'ordre optimisé 02 est égal à un ordre originel O1 modulé par un gain G auquel on ajoute un terme correctif conformément à la troisième relation suivante :

$$O2 = O1*G + P0*[1-(PCOM/100)]$$

où P0 représente ledit pas différentiel à poussée nulle et lorsque le moyen de commande en lacet est centré, PCOM représente le pourcentage de la poussée résultante générée par la commande de poussée 30 en pourcent du fait de sa position, « * » et « / » représentant respectivement le signe de la multiplication et de la division. Selon les deuxième et troisième variantes, le gain G utilisé varie alors avantageusement, de manière linéaire selon une première alternative et de manière non linéaire selon une deuxième alternative, en fonction de la poussée.

La figure 2 montre un premier diagramme explicitant la variation du gain selon la première alternative plafonnant le pas différentiel.

Ce premier diagramme présente en abscisse le pourcentage de la poussée PCOM générée notamment par les première et deuxième hélices 6', 6" et commandé par la commande de poussée, et en ordonnée le gain G.

On note que ce gain G modulé décroit linéairement d'un gain maximal GMAX à une poussée nulle vers un gain minimal GMIN à une poussée maximale correspondant à 100% de la poussée admissible par ledit hélicoptère hybride, le gain maximal GMAX étant avantageusement égal à une unité alors que le gain minimal GMIN est avantageusement égal à un tiers de ce gain maximal GMAX.

Le gain G est éventuellement déterminé à l'aide de la quatrième relation suivante où PCOM représente le pourcentage de la poussée résultante généré par la position de la commande de poussée à un instant donné, « / » et « * » représentant respectivement le signe de la division et le signe de la multiplication :

$$G = GMAX - [(GMAX - GMIN) * (PCOM/100)]$$

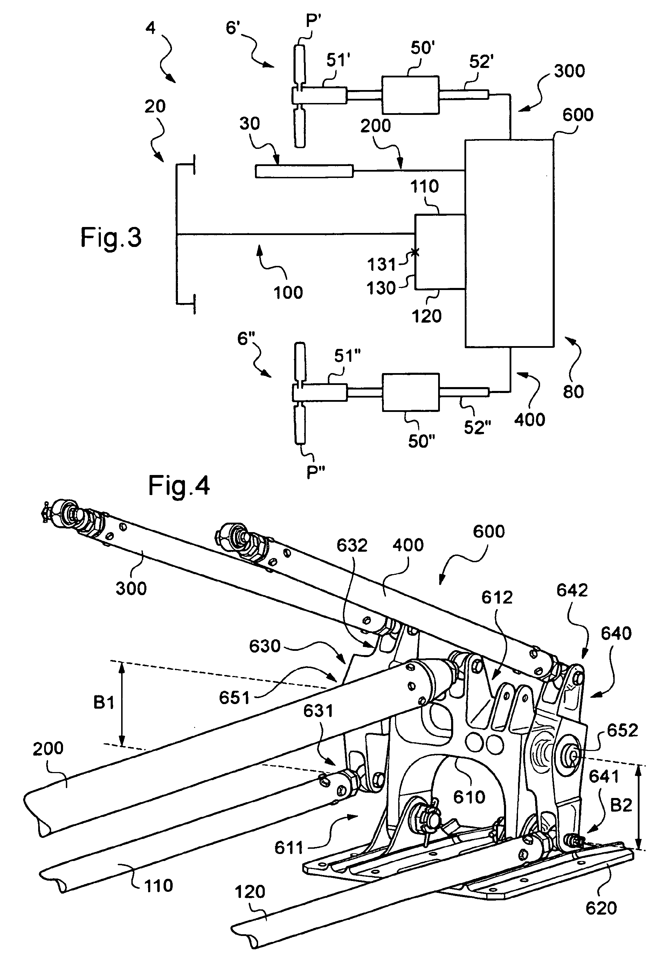

La figure 3 présente un premier mode de réalisation de l'invention mettant en oeuvre la première variante du procédé précédemment explicité.

Le dispositif de commande en lacet 4 comporte un moyen de commande en lacet 20, un palonnier, relié par une première chaîne cinématique principale 100 à un combinateur 80.

Plus précisément, la première chaîne cinématique principale 100 est articulée à une bielle intermédiaire 130 apte à effectuer un mouvement rotatif autour d'un pivot 131, ladite bielle intermédiaire étant reliée au combinateur par une bielle gauche 110 et une bielle droite 120.

Le combinateur 80 est en outre lié à une première tige de commande 52' d'un premier distributeur hydraulique 50' par une première chaîne cinématique secondaire 300. En fonction des ordres donnés par le pilote, la première tige de commande 52' est déplacée afin que le premier distributeur hydraulique 50' relie une première servocommande 51' au circuit hydraulique de l'hélicoptère hybride pour modifier le premier pas des premières pales P' de la première hélice 6'.

De même, le combinateur 80 est lié à une deuxième tige de commande 52" d'un deuxième distributeur hydraulique 50" par une deuxième chaîne cinématique secondaire 400. En fonction des ordres donnés par le pilote, la deuxième tige de commande 52" est déplacée afin que le deuxième distributeur hydraulique 50" relie une deuxième servocommande 51" au circuit hydraulique de l'hélicoptère hybride pour modifier le deuxième pas des deuxièmes pales P" de la deuxième hélice 6".

Par ailleurs, le dispositif de commande en lacet 4 comporte une commande de poussée 30 lié au combinateur 80 par une deuxième chaîne cinématique principale 200.

Dans ces conditions, le combinateur 80 additionne l'ordre de pas moyen donné par la commande de poussée 30 et l'ordre de pas différentiel donné par le moyen de commande 20 en lacet. Par suite, le pas d'une hélice correspond à la somme du pas moyen et du pas différentiel alors que le pas de l'autre hélice correspond à la différence du pas moyen et du pas différentiel.

De plus, le dispositif de commande en lacet 4 comporte un moyen d'ajustement pour optimiser l'ordre originel donné par le pilote via son moyen de commande 20 en lacet en fonction de la position de la commande de poussée 30.

Selon le premier mode de réalisation, le moyen d'ajustement inclut le combinateur 80 qui est en fait un combinateur/ coupleur 600 apte à corriger l'ordre originel d'un terme correctif dépendant de la commande de poussée 30.

La figure 4 présente un schéma d'un tel combinateur 80 de type combinateur/coupleur 600.

Ainsi, le combinateur/coupleur 600 comporte une structure porteuse 610 mobile par rapport à un support 620 de l'hélicoptère hybride.

Cette structure porteuse est articulée par deux branches de sa première zone extrémale 611 au support 620, via des rotules par exemple. De plus, la structure porteuse 610 est articulée à la deuxième chaîne cinématique principale 200 par une branche de sa deuxième zone extrémale 612. Ainsi, un mouvement longitudinal de la deuxième chaîne cinématique principale 200 génère une rotation de la structure porteuse autour de ses articulations au support 620.

En outre, le combinateur/coupleur 600 est pourvu d'un premier levier 630, une première extrémité 631 du premier levier 630 étant articulée par une rotule à la bielle gauche 110 alors que la deuxième extrémité 632 du premier levier 630 est articulée par une rotule à la première chaîne cinématique secondaire 300.

Le premier levier 630 est alors fixé à la structure porteuse 610 par un premier axe de fixation 651, masqué sur la figure 4. Un moyen usuel, un roulement à billes par exemple, est agencé entre le premier axe de fixation 651 et le premier levier 630 afin que le premier levier 630 puisse effectuer un mouvement rotatif autour dudit premier axe de fixation 651.

De même, le combinateur/coupleur 600 est pourvu d'un deuxième levier 640, une première extrémité 641 du deuxième levier 640 étant articulée par une rotule à la bielle droite 120 alors que la deuxième extrémité 642 du deuxième levier 640 est articulée par une rotule à la deuxième chaîne cinématique secondaire 400.

Le deuxième levier 640 est alors fixé à la structure porteuse 610 par un deuxième axe de fixation 652. Un moyen usuel, un roulement à billes par exemple, est agencé entre le deuxième axe de fixation 652 et le deuxième levier 640 afin que le deuxième levier 640 puisse effectuer un mouvement rotatif autour dudit deuxième axe de fixation 652.

Enfin, on constate que le premier bras de levier B1 séparant la première extrémité 631 du premier levier 630 à son point de pivot, soit à son premier axe de fixation 651, est inférieur au deuxième bras de levier B2 séparant la première extrémité 641 du deuxième levier 640 à son point de pivot, soit à son deuxième axe de fixation 652.

Lorsque le pilote manoeuvre sa commande de poussée 30, la seconde chaîne cinématique principale 200 entraîne une rotation de la structure porteuse 610 qui s'incline par rapport au support 620.

La structure porteuse entraîne dans son mouvement rotatif les premier et deuxième leviers ce qui génère une modification des premier et deuxième pas.

Par contre, lorsque le pilote manoeuvre son moyen de commande en lacet 20 la bielle gauche 110 effectue un déplacement selon un premier sens ce qui induit une rotation du premier levier 630 autour du premier axe de fixation 651 et donc une modification du premier pas. La bielle droite 120 se déplace concomitamment selon un deuxième sens, opposé au premier sens ce qui induit une rotation du deuxième levier 640 autour du deuxième axe de fixation 652, et donc une modification du deuxième pas. La structure porteuse 610 n'est alors pas mise en rotation.

Selon une deuxième variante du procédé, le moyen d'ajustement ne corrige pas l'ordre originel mais le module en fonction d'un gain G.

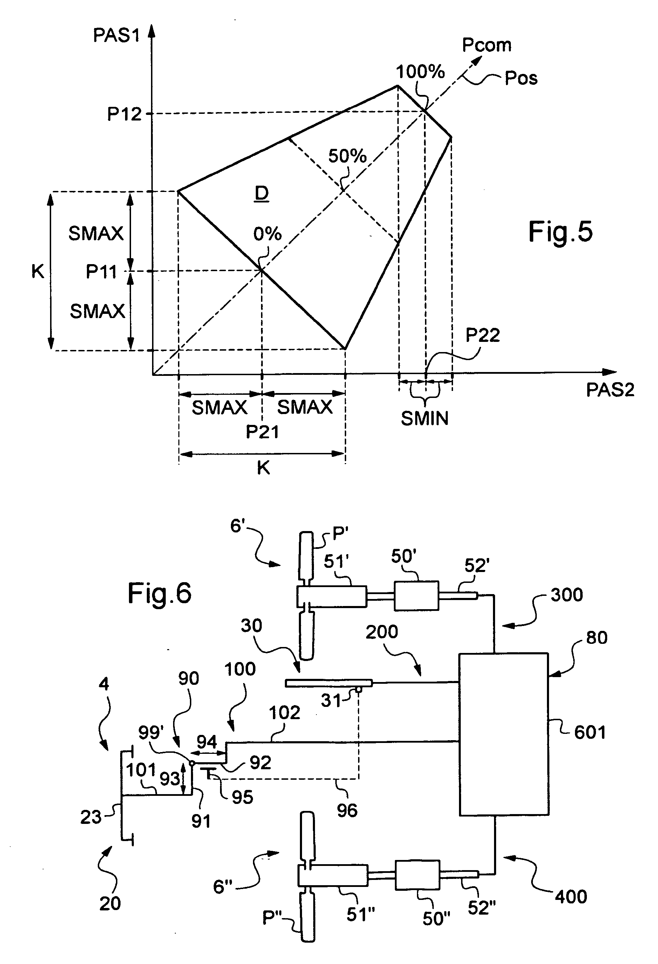

La figure 5 montre un deuxième diagramme montrant le domaine D auquel est restreint l'ordre originel, donné par le moyen de commande en lacet, du fait dudit gain G et donc selon ladite deuxième variante.

Ce deuxième diagramme présente le premier pas PAS1 des premières pales P' de la première hélice 6' en ordonnée, et le deuxième pas PAS2 des deuxièmes pales P" de la deuxième hélice 6" en abscisse.

De plus, ce deuxième diagramme comporte un troisième axe montrant le pourcentage de la poussée PCOM générée notamment par les première et deuxième hélices 6', 6" et commandé par la commande de poussée. On note que l'ordonnée du deuxième diagramme représente le symétrique de l'abscisse du deuxième diagramme par rapport au troisième axe.

On note que le pas moyen des premières et deuxièmes pales P', P" se situe sur un quatrième axe POS. Ce quatrième axe POS est confondu avec le troisième axe PCOM de symétrie du domaine D.

Par suite, à un pourcentage de la poussée PCOM générée notamment par les première et deuxième hélices 6', 6" égale à 0, le pas des premières pales vaut P11, valant 30 degrés par exemple, alors que le pas des deuxièmes pales vaut P21, valant 30 degrés par exemple.

Au contraire, à un pourcentage de la poussée PCOM générée notamment par les première et deuxième hélices 6', 6" égale à 100, le pas des premières pales vaut P12, égal à 60 degrés par exemple, alors que le pas des deuxièmes pales vaut P22, égal à 60 degrés par exemple, le pas moyen ayant nécessairement été augmenté via la commande de poussée.

Pour piloter l'hélicoptère hybride en lacet, le pilote va s'éloigner du pas moyen d'un pas différentiel à l'aide de son moyen de commande en lacet.

Néanmoins, ce pas différentiel est modulé ce qui permet de contenir les ordres donnés par le moyen de commande en lacet dans le domaine D représenté.

Ainsi, à un pourcentage de la poussée PCOM générée notamment par les première et deuxième hélices 6', 6" égal à 0, le pas différentiel maximal est plafonné à un niveau maximal SMAX, de 15 degrés par exemple.

En effet, du fait du gain variable, le déplacement maximal du moyen de commande en lacet induit un pas différentiel maximal modulé plafonné, de 15 degrés par exemple, à poussée nulle.

De même, à un pourcentage de la poussée PCOM générée notamment par les première et deuxième hélices 6', 6" égale à 100, le pas différentiel maximal est plafonné à un niveau minimal SMIN, de 5 degrés par exemple.

En effet, du fait du gain variable, ledit déplacement maximal du moyen de commande en lacet induit un pas différentiel maximal modulé plafonné à 100% de la poussée, de 5 degrés par exemple au lieu des 15 degrés à poussée nulle.

La figure 6 présente un deuxième mode de réalisation mettant en oeuvre la deuxième variante précitée.

Le dispositif de commande en lacet 4 comporte un moyen de commande en lacet 20, un palonnier, et une commande de poussée 30 reliés au combinateur 80 respectivement par une première et une deuxième chaînes cinématiques principales 100,200.

Contrairement au premier mode de réalisation, le combinateur 80 est un simple combinateur usuel 601 et non pas un combinateur/ coupleur 600.

Le combinateur 80 n'ajoute alors pas de terme correctif à l'ordre originel.

En effet, selon le deuxième mode de réalisation, le moyen d'ajustement possède un deuxième moyen d'optimisation pour non pas corriger mais moduler par un gain G l'ordre originel donné par un pilote via son moyen de commande en lacet 20.

Ainsi, le moyen d'ajustement comporte un guignol 90 agencé entre une première chaîne cinématique principale amont 101 articulée au moyen de commande en lacet 20 et une première chaîne cinématique principale aval 102 articulée au combinateur 80.

Plus précisément, le guignol 90 est muni d'un rayon amont 91 et d'un rayon aval 92 solidaires l'un de l'autre en rotation autour d'un point de pivot 99', le rayon amont 91 et le rayon aval 92 étant sensiblement perpendiculaires l'un à l'autre.

En outre le guignol 90 est pourvu d'un moyen de réglage 95 apte à modifier le quotient de la deuxième longueur 94, allant de l'extrémité libre de ce rayon aval au point de pivot 99', du rayon aval 92 par la première longueur 93, allant de l'extrémité libre de ce rayon amont au point de pivot 99', du rayon amont 91 en fonction de la commande de poussée 30.

Ce moyen de réglage 95 comporte alors un lien, une courroie 96 le liant à la commande de poussée 30. Lorsque le pilote manoeuvre la commande de poussée 30, la courroie 96 déplace longitudinalement le rayon aval 92 pour réduire la deuxième longueur reliant son extrémité du point de pivot 99'.

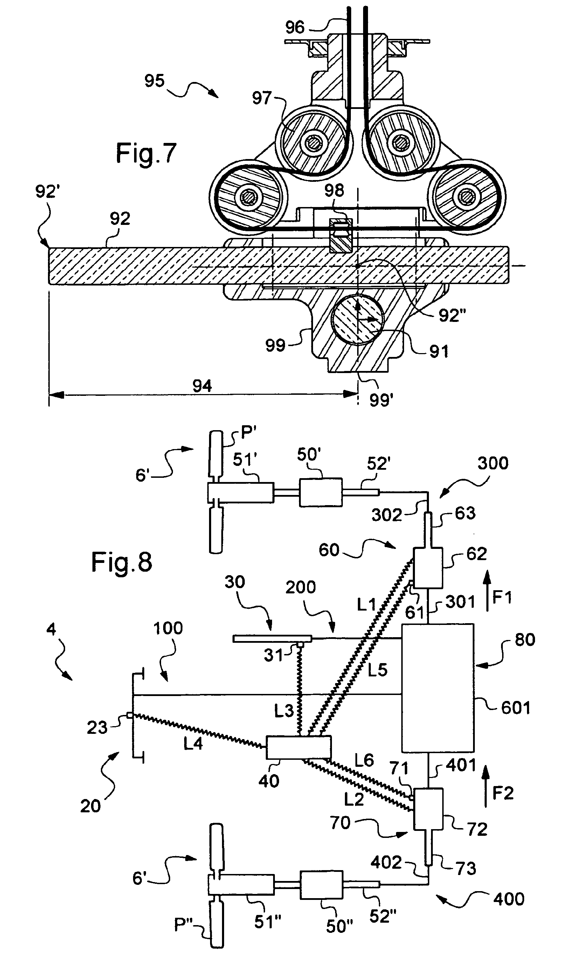

La figure 7 présente un schéma descriptif du guignol 90.

Ce guignol 90 comporte un corps 99 traversé par un premier bras représentant le rayon aval 92 et un deuxième bras représentant le rayon amont 91, ce corps 99 étant apte à effectuer une rotation autour du point de pivot 99'.

De plus, le guignol 90 est muni d'un moyen de réglage 95 pourvu d'une courroie 96 passant au travers d'un jeu de poulies 97 de mise sous tension pour être reliée à un pion 98 du premier bras.

Lorsque le pilote manoeuvre la commande de poussée 30, la courroie 96 déplace le pion 98, et de fait le premier bras. La deuxième longueur 94, reliant l'extrémité libre du rayon aval à son point de pivot 92", est alors agrandie ou réduite.

La figure 8 présente un troisième mode de réalisation mettant en oeuvre la deuxième variante précitée.

Le dispositif de commande en lacet 4 comporte un moyen de commande en lacet 20, un palonnier, et une commande de poussée 30 reliés au combinateur 80 respectivement par une première et une deuxième chaînes cinématiques principales 100, 200.

A l'instar du deuxième mode de réalisation, le combinateur 80 est un simple combinateur usuel 601 et non pas un combinateur/ coupleur 600.

Le moyen d'ajustement possède alors un troisième moyen d'optimisation pour non pas corriger mais moduler par un gain G l'ordre originel donné par un pilote via son moyen de commande en lacet 20.

Ainsi, le moyen d'ajustement comporte un premier et un deuxième éléments ajustables 60, 70 agencés respectivement sur les première et deuxième chaînes cinématique secondaires 300, 400.

Plus précisément, le premier élément ajustable 60, tel qu'un premier vérin électrique muni d'un corps de vérin 62 et d'une tige de vérin 63, est fixé d'une part à une première chaîne cinématique secondaire amont 301 reliée au combinateur 80 et, d'autre part, à une première chaîne cinématique secondaire aval 302 reliée à la première tige de commande 52' du premier distributeur hydraulique 50'.

On comprend qu'un même déplacement du moyen de commande 20 en lacet engendrera un déplacement différent de la première tige de commande 52', en fonction de la course de la tige de vérin 63 par rapport au corps de vérin 62 du premier vérin du premier élément ajustable 60. Une même course de la première chaîne cinématique secondaire amont 301 engendre en effet une course différente de la première chaîne cinématique secondaire aval 302 en fonction de la course de la tige de vérin 63 par rapport au corps de vérin 62 du premier vérin du premier élément ajustable 60.

De même, le deuxième élément ajustable 70, tel qu'un deuxième vérin électrique muni d'un corps de vérin 72 et d'une tige de vérin 73, est fixé d'une part à une deuxième chaîne cinématique secondaire amont 401 reliée au combinateur 80 et, d'autre part, à une deuxième chaîne cinématique secondaire aval 402 reliée à la deuxième tige de commande 52" du deuxième distributeur hydraulique 50".

Par suite, le dispositif de commande en lacet 4 possède un moyen d'ajustement 40 relié aux premier et deuxième éléments ajustables, à savoir les premier et deuxième vérins 60, 70, via une première et une deuxième liaisons L1, L2 filaires ou sans fil suivant le besoin. Le moyen d'ajustement 40, un premier moyen de calcul par exemple, peut alors modifier la longueur des premier et deuxième éléments ajustables en fonction de la poussée PCOM générée notamment par les première et deuxième hélices 6', 6", et donc en fonction de la commande de poussée 30.

De plus, le dispositif de commande en lacet 4 est avantageusement équipé d'un capteur de poussée 31, de type capteur angulaire, apte à envoyer au moyen d'ajustement 40 un premier signal via une troisième liaison L3. A l'aide de ce premier signal, le moyen d'ajustement 40 est à même de connaître la position de la commande en poussée 30 par des méthodes usuelles.

Sur la figure 8, la troisième liaison est une liaison filaire mais il est envisageable que ce capteur de position 31 communique avec le moyen d'ajustement 40 via une liaison sans fil.

De plus, afin de déterminer l'ordre donné initialement par le pilote, le moyen d'ajustement 40 est relié à un capteur de lacet 23, par une quatrième liaison L4 éventuellement filaire, agencé sur le moyen de commande 20 en lacet. Le capteur de lacet 23 transmet alors au moyen d'ajustement 40 une deuxième information relative à l'ordre de commande en lacet donné.

Enfin, le moyen d'ajustement est relié à un premier capteur de position 61, par une cinquième liaison L5, qui envoie au moyen d'ajustement 40 une troisième information relative à la longueur du premier élément ajustable 60. De même, le moyen d'ajustement est relié à un deuxième capteur de position 71, par une sixième liaison L6, le deuxième capteur de position 71 envoyant au moyen d'ajustement 40 une quatrième information relative à la longueur du deuxième élément ajustable 70.

Lorsque le pilote donne un ordre originel O1, il met en mouvement son moyen de commande 20 en lacet pour générer par exemple une augmentation du premier pas PAS1 des premières pales P' et donc une diminution du deuxième pas PAS2 des deuxièmes pales P". Dès lors, la chaîne cinématique secondaire amont 301 tend par exemple à se déplacer selon la première flèche F1 sur une première distance initiale DIS1, de 16 centimètres par exemple.

Le moyen d'ajustement 40 reçoit alors une information relative à l'ordre donné par le pilote via le capteur de lacet 23.

Par suite, le moyen d'ajustement 40 détermine le gain G en fonction de la position de la commande de poussée, par exemple un gain de 0.5.

Le moyen d'ajustement 40 ordonne alors la rétraction partielle du premier élément ajustable 60, d'une deuxième distance DIS2 d'ajustement en fonction d'un gain G à l'aide de l'équation suivante :

$$DIS2 = DIS1*(1-G)$$

Par suite, pour une première distance de 16 centimètres et un gain de 0.5, on obtient un déplacement de la tige de vérin des premier et deuxième vérins sur une longueur de 8 centimètres.

Plus précisément, le moyen d'ajustement 40 ordonne un déplacement de la tige de vérin d'un vérin selon un sens de déplacement opposé au sens de déplacement de la chaîne cinématique secondaire amont associée.

Ainsi, selon l'exemple décrit, le moyen d'ajustement 40 ordonne la rétraction de la tige de vérin 63 du premier vérin sur une longueur de 8 centimètres.

La première chaîne cinématique secondaire aval 302 de la première chaîne cinématique secondaire 300 va finalement se déplacer sur une distance plafonnée égale à la première distance DIS1 moins la deuxième distance DIS2 d'ajustement, et donc égale à 8 centimètres selon cet exemple.

Par suite, le premier pas PAS1 des premières pales P' est uniquement augmenté d'un pas différentiel modulé.

En parallèle, la deuxième chaîne cinématique secondaire amont 401 tend à se déplacer selon la deuxième flèche F2 sur la première distance initiale DIS1.

Le moyen d'ajustement 40 ordonne alors l'extension partielle du deuxième élément ajustable 70, et donc l'extension de la tige de vérin 73 du deuxième vérin sur une longueur de 8 centimètres.

Par ailleurs, selon une troisième variante du procédé, le moyen d'ajustement module l'ordre original en fonction d'un gain G puis le corrige à l'aide d'un terme correctif.

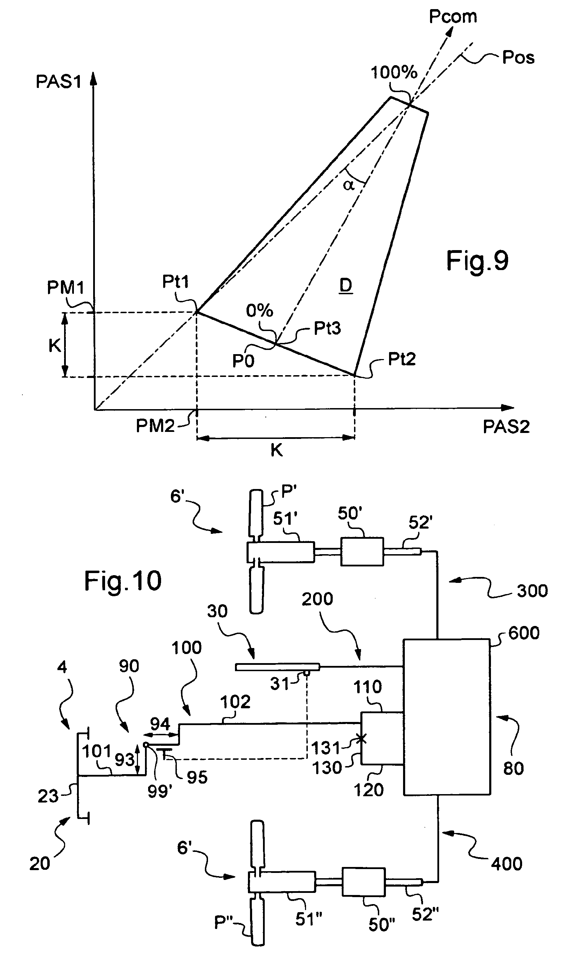

La figure 9 présente un troisième diagramme montrant le domaine D auquel est restreint l'ordre original selon ladite troisième variante.

Ce troisième diagramme présente le premier pas PAS1 des premières pales P' de la première hélice 6' en ordonnée, et le deuxième pas PAS2 des deuxièmes pales P" de la deuxième hélice 6" en abscisse.

De plus, ce troisième diagramme comporte un troisième axe, montrant le pourcentage de la poussée PCOM générée notamment par les première et deuxième hélices 6', 6" et commandé par la commande de poussée, ainsi qu'un quatrième axe POS représentant le pas moyen des pales commandés par la commande de poussée.

On note que contrairement à la deuxième variante du procédé explicité sur le deuxième diagramme de la figure 5, l'ordonnée du troisième diagramme ne représente plus le symétrique de l'abscisse du troisième diagramme par rapport au troisième axe.

En effet, l'introduction du terme correctif a provoqué une inclinaison du troisième axe PCOM d'un angle $\alpha$ par rapport au quatrième axe POS.

Au premier point Pt1, on se trouve dans une situation où :

- la poussée est nulle,

- le pilote pousse le moyen de commande en lacet à fond dans le sens dextrorsum.

A contrario, au deuxième point Pt2, on se trouve dans une situation où :

- la poussée est nulle,

- le pilote pousse le moyen de commande en lacet à fond dans le sens senestrorsum.

Enfin, au troisième point Pt3, on se trouve dans une situation où :

- la poussée est nulle,

- le pilote n'agit pas sur le moyen de commande en lacet qui est de fait centré.

On constate alors que le terme correctif induit un pas différentiel, égal à P0 de +9 degrés par exemple. Par suite, en admettant que le moyen de commande en lacet soit à même d'engendrer une valeur absolue de l'amplitude maximale K de 18 degrés :

- au premier point Pt1 et donc quand le pilote pousse le moyen de commande en lacet à fond dans le sens dextrorsum, le moyen de commande en lacet induit un pas différentiel égale à P0 moins la valeur absolue de l'amplitude maximale divisé par deux soit un pas différentiel nul,

- au deuxième point Pt2 et donc quand le pilote pousse le moyen de commande en lacet à fond dans le sens senestrorsum, le moyen de commande en lacet induit un pas différentiel égale à P0 plus la valeur absolue de l'amplitude maximale divisé par deux soit un pas différentiel de plus 18 degrés.

De manière surprenante, à poussée nulle, le premier point Pt1 donne le pas moyen PM1, PM2 des premier et deuxième pas PAS1, PAS2, l'ordre original modulé étant dans cet exemple contraire au terme correctif.

Selon la troisième variante, on obtient donc l'ordre optimisé 02 à partir d'un ordre originel O1 à l'aide de la troisième relation suivante :

$$O2 = O1*G + P0*[1-(PCOM/100)]$$

où O2 représente ledit ordre optimisé, O1 représente ledit ordre originel, G représente ledit gain, P0 représente ledit pas différentiel à poussée nulle et lorsque le moyen de commande en lacet 20 est centré, P0 étant égale à +9 degrés dans notre exemple, PCOM représente le pourcentage de la poussée résultante générée par la commande de poussée 30 en pourcent, « * » et « / » représentant respectivement le signe de la multiplication et de la division.

La figure 10 présente un quatrième mode de réalisation, à savoir le mode de réalisation préféré de l'invention, apte à mettre en oeuvre la troisième variante du procédé.

Conformément à ce quatrième mode de réalisation, le moyen d'ajustement comprend le guignol et le combinateur 80 de type combinateur/coupleur 600 figurant respectivement sur les figures 6 et 3.

On obtient ainsi le quatrième mode de réalisation en remplaçant le combinateur usuel 601 du deuxième mode de réalisation par le combinateur/coupleur 600 du premier mode de réalisation.

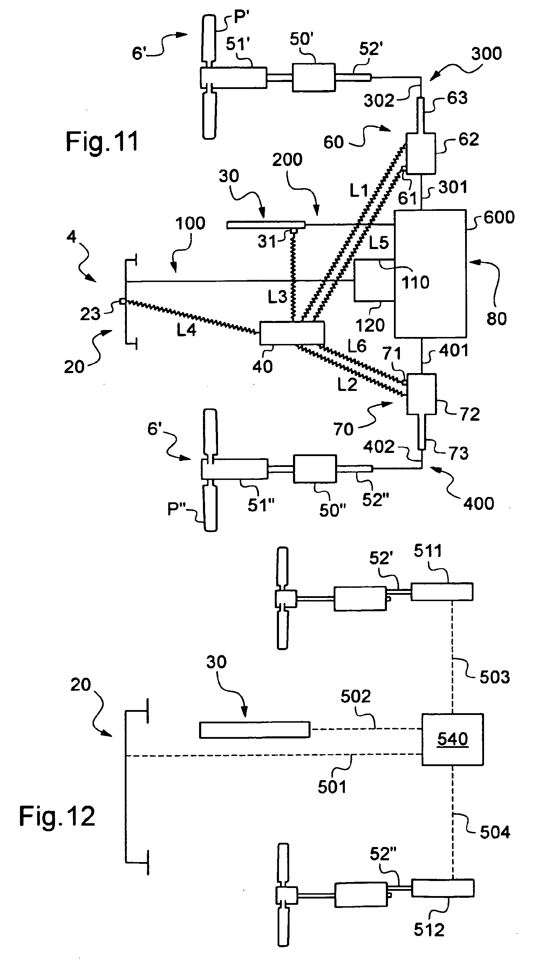

La figure 11 présente un cinquième mode de réalisation apte à mettre en oeuvre la troisième variante du procédé.

Conformément à ce cinquième mode de réalisation, le moyen d'ajustement comprend le combinateur 80 de type combinateur/coupleur 600 et les éléments ajustables 60, 70 figurant sur la figure 8.

On obtient ainsi le cinquième mode de réalisation en remplaçant le combinateur 80 de type combinateur usuel 601 du troisième mode de réalisation par le combinateur 80 de type combinateur/coupleur 600 du premier mode de réalisation.

On comprend que, contrairement au troisième mode de réalisation, la première distance parcourue par la première chaîne cinématique secondaire amont 301 est différente de la première distance parcourue par la deuxième chaîne cinématique secondaire amont 401 dans la mesure où la combinateur 80 est désormais un combinateur/coupleur 600 et non pas un combinateur usuel 601.

Enfin, la figure 12 présente un sixième mode de réalisation apte à mettre en oeuvre toutes les variantes du procédé.

Le moyen d'ajustement comporte un quatrième moyen d'optimisation à savoir un deuxième moyen de calcul 540 relié, par des liaisons électriques ou optiques 501, 502 503, 504, à :

-   la commande de poussée 30,

-   au moyen de commande en lacet 20, et

-   à un premier et un deuxième vérins de commande 511, 512.

Le deuxième moyen de calcul 540 optimise alors l'ordre originel O1 en fonction de la position de la commande de poussée 30 pour obtenir un ordre optimisé 02 de commande en lacet transmis aux premier et deuxième vérins de commande 511, 512.

Il suffit de programmer de manière adéquate le deuxième moyen de calcul 540 pour mettre en oeuvre l'une quelconque des variantes du procédé.

Les premier et deuxième vérins commandent alors un premier et un deuxième organes de commande des premier et deuxième pas. Plus précisément, les premier et deuxième vérins mettent en mouvement les première et deuxième tiges de commande 52', 52" pour ajuster les premier et deuxième pas.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définie par les revendications.

Par exemple, les premier et deuxième moyens de calcul peuvent être composés d'une pluralité de modules de calcul indépendants pour des raisons de redondance et de sûreté de fonctionnement, de un à quatre modules de calcul par exemple.

De même, les premier et deuxième vérins peuvent être composés d'une pluralité de vérins montés en série pour des raisons de redondance et de sûreté de fonctionnement.

**Revendications**

1.  Procédé de contrôle de l'attitude en lacet d'un hélicoptère hybride (1) comportant un fuselage (2) et comprenant :

    - un rotor principal de sustentation (10) agencé au dessus dudit fuselage (2),
    - une première et une deuxième hélices (6',6") disposées de part et d'autre dudit fuselage (2),
    - une commande de poussée (30) apte à modifier de la même quantité le premier pas (P1) des premières pales (P') de la première hélice (6') et le deuxième pas (P2) des deuxièmes pales (P") de la deuxième hélice (6"),
    - un moyen de commande en lacet (20) apte à générer un ordre originel (01) pour modifier l'attitude en lacet dudit hélicoptère hybride (1) en augmentant le pas desdites premières pales (P') et en baissant le pas desdites deuxièmes pales (P") d'un pas différentiel,

    **caractérisé en ce qu'**on optimise ledit ordre originel (O1) en fonction de la position de la commande de poussée (30) pour obtenir un ordre optimisé (02) de commande en lacet transmis auxdites première et deuxième pales.

2.  Procédé selon la revendication 1,
    **caractérisé en ce que**, pour obtenir ledit ordre optimisé, on corrige ledit ordre originel (O1) donné en degré de pas différentiel en ajoutant à cet ordre originel (01) un terme correctif fonction de la position de la commande de poussée (30) conformément à la première relation suivante :

$$O2=O1 + P0*[1-(PCOM/100)]$$

    où 02 représente ledit ordre optimisé, O1 représente ledit ordre originel, P0 représente le pas différentielle à poussée nulle et lorsque le moyen de commande en lacet (20) est centré, PCOM représente le pourcentage de la poussée résultante générée par la commande de poussée (20) en pourcent, « * » et « / » représentant respectivement le signe de la multiplication et de la division.

3.  Procédé selon la revendication 1,
    **caractérisé en ce que**, pour obtenir ledit ordre optimisé, on module ledit ordre originel par un gain variable en fonction de la position de la commande de poussée (30) conformément à la deuxième relation suivante :

$$O2=O1*G$$

    où 02 représente ledit ordre optimisé, O1 représente ledit ordre originel, G représente ledit gain et « * » le signe de la multiplication.

4.  Procédé selon la revendication 1,
    **caractérisé en ce que**, pour obtenir ledit ordre optimisé, on module ledit ordre originel par un gain variable en fonction de la position de la commande de poussée (30) et on ajoute un terme correctif fonction de la position de la commande de poussée (30) conformément à la troisième relation suivante :

$$O2=O1*G + P0*[1-(PCOM/100)]$$

    où 02 représente ledit ordre optimisé, 01 représente ledit ordre originel, G représente ledit gain, P0 représente ledit pas différentiel à poussée nulle et lorsque le moyen de commande en lacet (20) est centré, PCOM représente le pourcentage de la poussée résultante générée par la commande de poussée (20) en pourcent, « * » et « / » représentant respectivement le signe de la multiplication et de la division.

5.  Procédé selon l'une quelconque des revendications 3 à 4,
    **caractérisé en ce que** ledit gain (G) décroît d'un gain maximal (GMAX) atteint lorsque la commande de poussée (30) génère une poussée résultante minimale des première et deuxième hélices (6', 6") vers un gain minimal (GMIN), atteint lorsque la commande de poussée (30) génère une poussée résultante maximale des première et deuxième hélices (6', 6").

**6.** Procédé selon l'une quelconque des revendications 3 à 5,
**caractérisé en ce que** ledit gain (G) est déterminé à l'aide de la quatrième relation suivante où « G » représente ledit gain, « GMIN » ledit gain minimum, « GMAX » ledit gain maximum, « PCOM » le pourcentage de la poussée résultante générée par la position de la commande de poussée à un instant donné en pourcent, « * » et « / » représentant respectivement le signe de la multiplication et de la division :

$$G = GMAX - [(GMAX - GMIN) * (PCOM/100)]$$

**7.** Procédé selon l'une quelconque des revendications 5 à 6,
**caractérisé en ce que** ledit gain minimal (GMIN) est égal à un tiers dudit gain maximal (GMAX).

**8.** Hélicoptère hybride (1) comportant un fuselage (2) et comprenant :

- un rotor principal de sustentation (10) agencé au dessus dudit fuselage (2),
- une première et une deuxième hélices (6',6") disposées de part et d'autre dudit fuselage (2),
- une commande de poussée (30) apte à modifier de la même quantité le premier pas des premières pales (P') de la première hélice (6') et le deuxième pas des deuxièmes pales (P") de la deuxième hélice (6"),
- un dispositif de commande en lacet (4) pourvu d'un moyen de commande (20) en lacet apte à générer un ordre originel pour modifier l'attitude en lacet dudit hélicoptère hybride (1) en augmentant le premier pas desdites premières pales (P') et en baissant le deuxième pas desdites deuxièmes pales (P") d'un pas différentiel,
- un combinateur (80) apte à combiner un ordre de commande de poussée et un ordre de commande de pas différentiel,

**caractérisé en ce que**, ledit dispositif de commande en lacet comporte un moyen d'ajustement apte à optimiser ledit ordre originel (O1) en fonction de la position de la commande de poussée (30) pour obtenir un ordre optimisé (02) de commande en lacet transmis auxdites premières et deuxièmes pales (P', P").

**9.** Hélicoptère hybride selon la revendication 8,
**caractérisé en ce que** ledit moyen d'ajustement comporte ledit combinateur (600) lié au moyen de commande en lacet (20) par au moins deux bielles gauche et droite (110, 120), à la commande de poussée (30) par une deuxième chaîne cinématique principale (200), à un premier organe de commande (50') du premier pas par une première chaîne cinématique secondaire (300), et à un deuxième organe de commande (50") du deuxième pas par une deuxième chaîne cinématique secondaire (400); ledit combinateur (600) comporte :

- une structure porteuse (610) dont une première zone extrémale (611) est articulée sur un support (620) alors qu'une deuxième zone extrémale (612) est articulée à ladite deuxième chaîne cinématique principale (200),
- un premier levier (630) dont une première extrémité (631) est articulée à la bielle gauche (110) et dont une deuxième extrémité (632) est articulée à la première chaîne cinématique secondaire (300), ledit premier levier (630) étant libre d'effectuer un mouvement rotatif autour d'un premier axe de fixation (651) à ladite structure porteuse (610),
- un deuxième levier (640) dont une première extrémité (641) est articulée à la bielle droite (120) et dont une deuxième extrémité (642) est articulée à la deuxième chaîne cinématique secondaire, ledit deuxième levier étant libre d'effectuer un mouvement de rotation autour d'un deuxième axe de fixation (652) à ladite structure porteuse (610),
- un premier bras de levier (B1) séparant la première extrémité (631) du premier levier (630) au dit premier axe de fixation (651) étant inférieur à un deuxième bras de levier (B2) séparant la première extrémité (641) du deuxième levier (640) au dit deuxième axe de fixation (652).

**10.** Hélicoptère hybride selon l'une quelconque des revendications 8 et 9,
**caractérisé en ce que** ledit moyen d'ajustement comportant un guignol (90) agencé en série sur une première chaîne cinématique principale (100) entre une première chaîne cinématique principale amont (101) liée au moyen de commande en lacet (20) et une première chaîne cinématique principale aval (102) dirigé vers ledit combinateur (80), ledit guignol (90) étant muni d'un rayon amont (91) et d'un rayon aval (92) formant une angulation entre eux, ledit rayon amont (91) étant fixé à ladite première chaîne cinématique amont (101) alors que ledit rayon aval (92) est lié à ladite première chaîne cinématique principale aval (102), ledit guignol comporte un moyen de réglage (95) du quotient de la deuxième longueur (94) du rayon aval (92) par la première longueur (93) du rayon amont (91), ce moyen de réglage (95) étant mécaniquement commandé par la commande de poussée (30).

**11.** Hélicoptère hybride selon l'une quelconque des revendications 8 à 9,
**caractérisé en ce que** ledit moyen d'ajustement comportant un premier élément ajustable (60) d'une première chaîne cinématique secondaire (300) et un deuxième élément ajustable (70) d'une deuxième chaîne cinématique secondaire (400), un premier moyen de calcul (40) dudit moyen d'ajustement est apte à modifier la longueur des premier et deuxième éléments ajustables (60, 70) en fonction de la commande de poussée (30) pour moduler ledit ordre originel (01) par un gain (G) variable en fonction de la position de ladite commande de poussée (30).

**12.** Hélicoptère hybride selon la revendication 11,
**caractérisé en ce qu'**au moins un élément ajustable comportant un vérin (60, 70) solidaire d'une chaîne cinématique secondaire amont (301, 401) et d'une chaîne cinématique secondaire aval (302, 402), ledit vérin étant muni d'un corps de vérin (62, 72) et d'une tige de vérin (63, 73), le moyen de commande en lacet (20) déplaçant ladite chaîne cinématique secondaire amont (301, 401) via un combinateur (80) sur une première distance (DIS1) selon un premier sens de déplacement, ledit premier moyen de calcul (40) ordonne le déplacement de ladite tige de vérin par rapport audit corps de vérin sur une deuxième distance (DIS2) selon un deuxième sens de déplacement opposé au dit premier sens de déplacement, ladite deuxième distance (DIS2) étant déterminée par ledit premier moyen de calcul (40) à l'aide de l'équation suivante :

$$DIS2 = DIS1*[1-G]$$

où G représente ledit gain variable.

**13.** Hélicoptère hybride selon l'une quelconque des revendications 11 à 12,
**caractérisé en ce que** ledit moyen d'ajustement comporte un capteur de position (61, 71) par élément ajustable relié audit premier moyen de calcul (40) pour lui envoyer une information relative à la longueur de l'élément ajustable (60, 70) correspondant.

**14.** Hélicoptère hybride selon l'une quelconque des revendications 11 à 13,
**caractérisé en ce que** ledit moyen d'ajustement comporte un capteur de poussée (31) relié audit premier moyen de calcul (40) pour lui envoyer une première information relative à la position de ladite commande de poussée (30).

**15.** Hélicoptère hybride selon l'une quelconque des revendications 11 à 14,
**caractérisé en ce que** ledit moyen d'ajustement comporte un capteur de lacet (23) relié audit premier moyen de calcul (40) pour lui envoyer une deuxième information relative à la position dudit moyen de commande en lacet (20).

**16.** Hélicoptère hybride selon la revendication 8, **caractérisé en ce que**, ledit moyen d'ajustement comporte un deuxième moyen de calcul (540) relié notamment d'une part à la commande de poussée (30) et au moyen de commande en lacet (20) par des liaisons électriques ou optiques (501, 502, 503, 504) et d'autre part à un premier et un deuxième vérins de commande (511, 512) respectivement d'un premier et d'un deuxième organes de commande des premier et deuxième pas, ledit deuxième moyen de calcul optimisant ledit ordre originel (O1) en fonction de la position de la commande de poussée (30) pour obtenir un ordre optimisé (02) de commande en lacet transmis aux premier et deuxième vérins de commande (511, 512).

**Claims**

**1.** Method of controlling the yaw attitude of a hybrid helicopter (1) having a fuselage (2) and comprising:

- a main lift rotor (10) arranged above said fuselage (2) ;
- first and second propellers (6', 6") disposed on either side of said fuselage (2);
- a thrust control (30) suitable for modifying the first pitch (P1) of the first blades (P') of the first propeller (6') and the second pitch (P2) of the second blades (P") of the second propeller (6") by the same quantity; and
- yaw control means (20) suitable for generating an original order (O1) for modifying the yaw attitude of said hybrid helicopter (1) by increasing the pitch of said first blades (P') and by decreasing the pitch of said second blades (P") by a differential pitch;

**characterised in that** said original order (O1) is optimised as a function of the position of the thrust control (30) to obtain an optimised yaw control order (02) that is transmitted to said first and second blades.

2. Method according to Claim 1,
**characterised in that**, in order to obtain said optimised order, said original order (O1) given in differential pitch degrees is corrected by adding to said original order (O1) a corrective term that is a function of the position of the thrust control (30) in accordance with the following first relationship:

$$O2=O1 \ + \ P0*[1-(PCOM/100)]$$

where 02 represents said optimised order, O1 represents said original order, P0 represents the differential pitch at zero thrust and when the yaw control means (20) is centred, PCOM represents the percentage of the resultant thrust generated by the thrust control (20) [sic] in percent, and "*" and "/" represent respectively the multiplication sign and the division sign.

3. Method according to Claim 1,
**characterised in that**, in order to obtain said optimised order, said original order is modulated by a gain that is variable as a function of the position of the thrust control (30) in accordance with the following second relationship:

$$O2=O1*G$$

where 02 represents said optimised order, O1 represents said original order, G represents said gain, and "*" represents the multiplication sign.

4. Method according to Claim 1,
**characterised in that**, in order to obtain said optimised order, said original order is modulated by a gain that is variable as a function of the position of the thrust control (30) and a corrective term is added that is a function of the position of the thrust control (30) in accordance with the following third relationship:

$$O2=O1*G \ + \ P0*[1-(PCOM/100)]$$

where 02 represents said optimised order, O1 represents said original order, G represents said gain, P0 represents said differential pitch at zero thrust and when the yaw control means (20) are centred, PCOM represents the percentage of the resultant thrust generated by the thrust control (20) [sic] in percent, and "*" and "/" represent respectively the multiplication sign and the division sign.

5. Method according to any one of Claims 3 to 4,
**characterised in that** said gain (G) decreases from a maximum gain (GMAX) reached when said thrust control (30) generates a minimum resultant thrust from the first and second propellers (6', 6") towards a minimum gain (GMIN) reached when the thrust control (30) generates a maximum resultant thrust from the first and second propellers (6' 6").

6. Method according to any one of Claims 3 to 5,
**characterised in that** said gain (G) is determined using the following fourth relationship in which "G" represents said gain, "GMIN" said minimum gain, "GMAX" said maximum gain, "PCOM" the percentage of the resultant thrust generated by the position of the thrust control at a given instant in percent, and "*" and "/" represent respectively the multiplication sign and the division sign:

$$G = GMAX - [(GMAX - GMIN)*(PCOM/100)]$$

**7.** Method according to any one of Claims 5 to 6,
**characterised in that** said minimum gain (GMIN) is equal to one-third of said maximum gain (GMAX).

**8.** Hybrid helicopter (1) having a fuselage (2) and comprising:

- a main lift rotor (10) arranged above said fuselage (2);
- first and second propellers (6', 6") disposed on either side of said fuselage (2);
- a thrust control (30) suitable for modifying the first pitch of the first blades (P') of the first propeller (6') and the second pitch of the second blades (P") of the second propeller (6") by the same quantity;
- a yaw control device (4) provided with yaw control means (20) suitable for generating an original order for modifying the yaw attitude of said hybrid helicopter (1) by increasing the first pitch of said first blades (P') and by decreasing the second pitch of said second blades (P") by a differential pitch; and
- a combiner (80) suitable for combining a thrust control order and a differential pitch control order;

**characterised in that** said yaw control device comprises adjustment means suitable for optimising said original order (O1) as a function of the position of the thrust control (30) in order to obtain an optimised yaw control order (02) that is transmitted to said first and second blades (P', P").

**9.** Hybrid helicopter according to Claim 8,
**characterised in that** said adjustment means comprise said combiner (600) connected to the yaw control means (20) via at least a left link (110) and a right link (120), to the thrust control (30) by a second main kinematic linkage (200), to a first control member (50') for controlling the first pitch via a first secondary kinematic linkage (300), and to a second control member (50") for controlling the second pitch via a second secondary kinematic linkage (400), said combiner (600) comprising:

- a carrier structure (610) having a first end zone (611) hinged on a support (620) and a second end zone (612) hinged to said second main kinematic linkage (200);
- a first lever (630) having a first end (631) hinged to the left link (110) and a second end (632) hinged to the first secondary kinematic linkage (300), said first lever (630) being free to perform a rotary movement about a first fastening pin (651) fastening it to said carrier structure (610);
- a second lever (640) having a first end (641) hinged to the right link (120) and having a second end (642) hinged to the second secondary kinematic linkage, said second lever being free to perform a rotary movement about a second fastening pin (652) fastening it to said carrier structure (610); and
- a first lever arm (B1) separating the first end (631) of the first lever (630) from said first fastening pin (651) being shorter than a second lever arm (B2) separating the first end (641) of the second lever (640) from said second fastening pin (652).

**10.** Hybrid helicopter according to any one of Claims 8 and 9,
**characterised in that** said adjustment means comprise a crank (90) arranged in series on a first main kinematic linkage (100) between an upstream first main kinematic linkage (101) connected to the yaw control means (20) and a downstream first main kinematic linkage (102) directed towards said combiner (80), said crank (90) being provided with an upstream radius (91) and a downstream radius (92) forming an angle between them, said upstream radius (91) being fastened to said upstream first main kinematic linkage (101) while said downstream radius (92) is linked to said downstream first main kinematic linkage (102), said crank comprising regulating means (95) for regulating the quotient of the second length (94) of the downstream radius (92) by the first length (93) of the upstream radius (91), said regulating means (95) being mechanically controlled by the thrust control (30).

**11.** Hybrid helicopter according to any one of Claims 8 to 9,
**characterised in that** said adjustment means comprise a first adjustable element (60) of a first secondary kinematic linkage (300) and a second adjustable element (70) of a second secondary kinematic linkage (400), first computing means (40) of said adjustment means being suitable for modifying the length of said first and second adjustable elements (60, 70) as a function of the thrust control (30) to modulate said original order (O1) by a gain (G) that is variable as a function of the position of said thrust control (30).

**12.** Hybrid helicopter according to Claim 11,
**characterised in that** at least one adjustable element comprises an actuator (60, 70) secured to an upstream secondary kinematic linkage (301, 401) and a downstream secondary kinematic linkage (302, 402), said actuator being provided with an actuator body (62, 72) and an actuator rod (63, 73), the yaw control means (20) displacing said upstream secondary kinematic linkage (301, 401) via a combiner (80) over a first distance (DIS1) in a first displacement direction, and said first computing means (40) causing the displacement of said actuator rod relative to said actuator body over a second distance (DIS2) in a second displacement direction opposite to said first displacement direction, said second distance (DIS2) being determined by said first computing means (40) using the following equation:

$$DIS2 = DIS1*[1-G]$$

where G represents said variable gain.

**13.** Hybrid helicopter according to any one of Claims 11 to 12,
**characterised in that** said adjustment means comprise one position sensor (61, 71) per adjustable element connected to said first computing means (40) to send it information relating to the length of the corresponding adjustable element (60, 70).

**14.** Hybrid helicopter according to any one of Claims 11 to 13,
**characterised in that** said adjustment means comprise a thrust sensor (31) connected to said first computing means (40) to send it first information relating to the position of said thrust control (30).

**15.** Hybrid helicopter according to any one of Claims 11 to 14,
**characterised in that** said adjustment means comprise a yaw sensor (23) connected to said first computing means (40) to send it second information relating to the position of said yaw control means (20).

**16.** Hybrid helicopter according to Claim 8,
**characterised in that** said adjustment means comprise a second computing means (540) connected in particular, on the one hand, to the thrust control (30) and to the yaw control means (20) via electrical or optical connections (501, 502, 503, 504) and, on the other hand, to first and second control actuators (511, 512) for controlling respective first and second control members for controlling the first and second pitches, said second computing means optimising said original order (O1) as a function of the position of the thrust control (30) to obtain an optimised yaw control order (02) that is transmitted to the first and second control actuators (511, 512).

**Patentansprüche**

**1.** Verfahren zur Giersteuerung eines Hybridhelikopters (1) mit einem Rumpf (2), der aufweist:

- einen oberhalb des Rumpfes (2) angeordneten Hauptauftriebsrotor (10),
- einen ersten und einen zweiten Propeller (6', 6"), die zu beiden Seiten des Rumpfes (2) angeordnet sind,
- eine Schubsteuerung (30), die um den gleichen Betrag die erste Steigung (P1) der ersten Propellerblätter (P') des ersten Propellers (6') und die zweite Steigung (P2) der zweiten Propellerblätter (P") des zweiten Propellers (6") ändern kann,
- ein Giersteuerungsmittel (20), welches einen Ursprungssteuerbefehl (O1) erzeugen kann, um das Gierverhalten des Hybridhelikopters (1) zu verändern durch Erhöhung der Steigung der ersten Propellerblätter (P1) und durch Absenken der Steigung der zweiten Propellerblätter (P") um einen Steigungsdifferenzbetrag,

**dadurch gekennzeichnet, dass** der Ursprungssteuerbefehl (O1) in Abhängigkeit von der Position der Schubsteuerung (30) optimiert wird, um einen optimierten Steuerbefehl (02) für die Giersteuerung zu erhalten, der an die ersten und zweiten Propellerblätter übertragen wird.

**2.** Verfahren nach Anspruch 1,
**dadurch gekennzeichnet, dass**, um den optimierten Steuerbefehl zu erhalten, der Ursprungssteuerbefehl (O1) angegeben in Grad der Steigungsdifferenz korrigiert wird, indem dem Ursprungssteuerbefehl (O1) ein Korrektivausdruck hinzugefügt wird in Abhängigkeit von der Position der Schubsteuerung (30) gemäß der folgenden ersten Beziehung:

$$O2 = O1 + P0 * [1\text{-}(PCOM/100)],$$

wobei 02 den optimierten Steuerbefehl darstellt, O1 den Ursprungssteuerbefehl darstellt, P0 die Differenzsteigung bei einem Schub Null und wenn das Giersteuerungsmittel (20) zentriert ist, PCOM den Prozentsatz des sich ergebenden Schubs, erzeugt durch die Schubsteuerung (20), in Prozent darstellt, und "*" und "/" jeweils das Multiplikationszeichen und das Divisionszeichen darstellen.

3. Verfahren nach Anspruch 1,
   **dadurch gekennzeichnet, dass**, um den optimierten Steuerbefehl zu erhalten, der Ursprungssteuerbefehl durch einen variablen Verstärkungsfaktor verändert wird in Abhängigkeit von der Position der Schubsteuerung (30) gemäß der folgenden zweiten Beziehung:

$$O2 = O1 * G,$$

wobei 02 den optimierten Steuerbefehl, O1 den Ursprungssteuerbefehl, G den Verstärkungsfaktor und "*" das Multiplikationszeichen darstellen.

4. Verfahren nach Anspruch 1,
   **dadurch gekennzeichnet, dass**, um den optimierten Steuerbefehl zu erhalten, der Ursprungssteuerbefehl verändert wird durch einen variablen Verstärkungsfaktor in Abhängigkeit von der Position der Schubsteuerung (30), und wobei man einen Korrektivausdruck hinzufügt, der abhängig ist von der Position der Schubsteuerung (30) gemäß der folgenden dritten Beziehung:

$$O2 = O1 * G + P0 * [1\text{-}(PCOM/100)],$$

wobei 02 den optimierten Steuerbefehl, O1 den Ursprungssteuerbefehl, G den Verstärkungsfaktor, P0 die Steigungsdifferenz bei Schub Null und wenn das Giersteuerungsmittel (20) zentriert ist, darstellen, PCOM den Prozentsatz des resultierenden Schubs, der erzeugt wird durch die Schubsteuerung (30), in Prozent darstellt, sowie "*" und "/" jeweils das Multiplikationszeichen und das Divisionszeichen darstellen.

5. Verfahren nach einem der Ansprüche 3 oder 4,
   **dadurch gekennzeichnet, dass** der Verstärkungsfaktor (G) ausgehend von einem maximalen Verstärkungsfaktor (GMAX), der erhalten wird, wenn die Schubsteuerung (30) einen minimalen resultierenden Schub der ersten und zweiten Propeller (6', 6") erzeugt, abnimmt auf einen minimalen Verstärkungsfaktor (GMIN), der erhalten wird, wenn die Schubsteuerung (30) einen maximalen sich ergebenden Schub der ersten und zweiten Propeller (6', 6") erzeugt.

6. Verfahren nach einem der Ansprüche 3 bis 5,
   **dadurch gekennzeichnet, dass** der Verstärkungsfaktor (G) mit der folgenden vierten Beziehung bestimmt wird, wobei "G" den Verstärkungsfaktor darstellt, "GMIN" den minimalen Verstärkungsfaktor, "GMAX" den maximalen Verstärkungsfaktor, "PCOM" den Prozentsatz des sich ergebenden Schubs, der durch die Position der Schubsteuerung zu einem vorgegebenen Zeitpunkt erzeugt wird, in Prozent, "*" und "/" jeweils das Multiplikationszeichen bzw. das Divisionszeichen darstellen:

$$G = GMAX - [(GMAX - GMIN) * (PCOM/100)].$$

7.  Verfahren nach einem der Ansprüche 5 oder 6,
    **dadurch gekennzeichnet, dass** der minimale Verstärkungsfaktor (GMIN) gleich einem Drittel des maximalen Verstärkungsfaktors (GMAX) ist.

8.  Hybridhelikopter (1) mit einem Rumpf (2), der aufweist:

    - einen Hauptauftriebsrotor (10), der oberhalb des Rumpfes (2) angeordnet ist,
    - einen ersten und einen zweiten Propeller (6', 6"), die zu beiden Seiten des Rumpfes (2) angeordnet sind,
    - eine Schubsteuerung (30), die um den gleichen Wert die erste Steigung der ersten Propellerblätter (P') des ersten Propellers (6') und die zweite Steigung der zweiten Propellerblätter (P") des zweiten Propellers (6") verändern kann,
    - eine Giersteuerungsvorrichtung (4) mit einem Giersteuerungsmittel (20), welches einen Ursprungssteuerbefehl erzeugen kann zum Ändern des Gierverhaltens des Hybridhelikopters (1), indem die erste Blattsteigung der ersten Propellerblätter (P') erhöht wird und indem die zweite Steigung der zweiten Propellerblätter (P") um eine Differenzsteigung abgesenkt wird,
    - eine Kombiniervorrichtung (80), welche einen Schubsteuerbefehl und einen Steigungsdifferenzsteuerbefehl kombinieren kann,

    **dadurch gekennzeichnet, dass** die Vorrichtung zur Giersteuerung ein Einstellmittel aufweist, welches den Ursprungssteuerbefehl (O1) in Abhängigkeit von der Position der Schubsteuerung (30) optimieren kann, um einen optimierten Steuerbefehl (02) zur Giersteuerung zu erhalten, der an die ersten und zweiten Propellerblätter (P', P") weitergegeben wird.

9.  Hybridhelikopter nach Anspruch 8,
    **dadurch gekennzeichnet, dass** das Einstellmittel die Kombiniervorrichtung (600) aufweist, die mit dem Giersteuerungsmittel (20) über mindestens zwei rechte und linke Steuergestänge (110, 120) verbunden ist, und mit der Schubsteuerung (30) über eine zweite kinematische Hauptkette (200), mit einem ersten Steuerorgan (50') der ersten Steigung über eine erste sekundäre kinematische Kette (300) und mit einem zweiten Steuerorgan (50") der zweiten Steigung über eine zweite sekundäre kinematische Kette (400) verbunden ist, wobei die Kombiniervorrichtung (600) aufweist:

    - eine Trägerstruktur (610), von der ein erster Endbereich (611) auf einem Träger (620) angelenkt ist, während ein zweiter Endbereich (612) an der zweiten kinematischen Hauptkette (200) angelenkt ist,
    - einen ersten Hebel (630), dessen eines erstes Ende (631) an dem linken Schaltgestänge (110) dessen zweites Ende (632) an der ersten sekundären kinematischen Kette (300) angelenkt ist, wobei der erste Hebel (630) eine Drehbewegung um eine erste Achse (651) zur Befestigung an der Trägerstruktur (610) ausführen kann,
    - einen zweiten Hebel (640), dessen eines erstes Ende (641) an dem rechten Schaltgestänge (120) angelenkt ist und dessen zweites Ende (642) an der zweiten sekundären kinematischen Kette angelenkt ist, wobei der zweite Hebel eine Drehbewegung um eine zweite Achse (652) zur Befestigung an der Trägerstruktur (610) ausrühren kann,
    - einen ersten Hebelarm (B 1), der das erste Ende (631) des ersten Hebels (630) von der ersten Befestigungsachse (651) trennt, unterhalb eines zweiten Hebelarms (B2) angeordnet ist, der das erste Ende (641) des zweiten Hebels (640) von der zweiten Befestigungsachse (652) trennt.

10. Hybridhelikopter nach einem der Ansprüche 8 oder 9,
    **dadurch gekennzeichnet, dass** das Einstellmittel einen Umlenkhebel (90) aufweist, der in Reihe auf einer ersten kinematischen Hauptkette (100) zwischen einer oberen ersten kinematischen Hauptkette (110), die mit dem Giersteuerungsmittel (20) verbunden ist, und einer ersten unterhalb gelegenen kinematischen Hauptkette (102) angeordnet ist, die auf die Kombiniervorrichtung (80) gerichtet ist, wobei der Umlenkhebel (90) mit einem oberen Arm (91) und einem unteren Arm (92) versehen ist, die einen Winkel zwischen sich bilden, wobei der obere Arm (91) an der ersten oberen kinematischen Kette (101) befestigt ist, während der untere Arm (92) mit der unteren ersten kinematischen Hauptkette (102) verbunden ist, wobei der Umlenkwinkel ein Mittel zum Regeln (95) des Quotienten der zweiten Länge (94) des unteren Arms (92) durch die erste Länge (93) des oberen Arms (91) aufweist, wobei dieses Regelmittel (95) mechanisch durch die Schubsteuerung (30) gesteuert wird.

11. Hybridhelikopter nach einem der Ansprüche 8 oder 9,
    **dadurch gekennzeichnet, dass** das Einstellmittel ein erstes justierbares Element (60) einer ersten sekundären kinematischen Kette (300) und ein zweites justierbares Element (70) einer zweiten sekundären kinematischen Kette (400) aufweist, ein erstes Rechenmittel (40) des Einstellmittels die Länge der ersten und zweiten einstellbaren Elemente (60, 70) verändern kann in Abhängigkeit von der Schubsteuerung (30), um den Ursprungssteuerbefehl (O1) mittels eines variablen Verstärkungsfaktors (G) in Abhängigkeit von der Position der Schubsteuerung (30) zu verändern.

12. Hybridhelikopter nach Anspruch 11,
**dadurch gekennzeichnet, dass** mindestens ein einstellbares Element mit einer Spindel (60, 70), welches mit einer oberen sekundären kinematischen Kette (301, 401) und mit einer unteren sekundären kinematischen Kette (302, 402) fest verbunden ist, vorgesehen ist, wobei die Spindel mit einem Spindelkörper (62, 72) und einer Spindelstange (63, 73) versehen ist, das Giersteuerungsmittel (20) die obere sekundäre kinematische Kette (301, 401) über eine Kombiniervorrichtung (80) über eine erste Entfernung (DIS 1) in einer ersten Bewegungsrichtung bewegt, wobei das erste Rechenmittel (40) die Bewegung der Spindelstange bezüglich des Spindelkörpers über eine zweite Entfernung (DIS2) in einer zweiten Bewegungsrichtung, die der ersten Bewegungsrichtung entgegengesetzt ist, anordnet, und die zweite Entfernung (DIS2) durch das erste Rechenmittel (40) mit Hilfe der folgenden Gleichung bestimmt wird:

$$DIS2 = DIS1*[1-G],$$

wobei G den variablen Verstärkungsfaktor darstellt.

13. Hybridhelikopter nach einem der Ansprüche 11 oder 12, **dadurch gekennzeichnet, dass** das Einstellmittel einen Positionsdetektor (61, 71) pro einstellbarem Element aufweist, welcher mit dem ersten Rechenmittel (40) verbunden ist, um ihm eine Information bezüglich der Länge des entsprechenden einstellbaren Elements (60, 70) zu übermitteln.

14. Hybridhelikopter nach einem der Ansprüche 11 bis 13,
**dadurch gekennzeichnet, dass** das Einstellmittel einen Schubdetektor (31) aufweist, der mit dem ersten Rechenmittel (40) verbunden ist, um ihm eine erste Information bezüglich der Position der Schubsteuerung (30) zu übennitteln.

15. Hybridhelikopter nach einem der Ansprüche 11 bis 14,
**dadurch gekennzeichnet, dass** das Einstellmittel einen Gierdetektor (23) aufweist, der mit dem ersten Rechenmittel (40) verbunden ist, um ihm eine zweite Information bezüglich der Position des Giersteuerungsmittels (20) zu übermitteln.

16. Hybridhelikopter nach Anspruch 8,
**dadurch gekennzeichnet, dass** das Einstellmittel ein zweites Rechenmittel (540) aufweist, welches insbesondere einerseits mit der Schubsteuerung (30) und mit dem Giersteuerungsmittel (20) über elektrische oder optische Verbindungen (501, 502, 503, 504) und andererseits mit einer ersten und einer zweiten Steuerspindel (511, 512) eines ersten und eines zweiten Steuerorgans der ersten und zweiten Propellerblätter verbunden ist, wobei das zweite Rechenmittel den Ursprungssteuerbefehl (O1) in Abhängigkeit von der Position der Schubsteuerung (30) optimiert, um einen optimierten Giersteuerungsbefehl (02) zu erhalten, der an die erste und die zweite Steuerspindel (511, 512) übertragen wird.

# Fig.1

# Fig.2

Fig.3

Fig.4

Fig.5

Fig.6

Fig.7

Fig.8

Fig.9

Fig.10

Fig.11

Fig.12

**EP 2 261 119 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- GB 613715 A
- US 6513752 B
- FR 2476013
- FR 1132452